# EUROPEAN PATENT APPLICATION

(11) **EP 2 184 432 A2**
(43) Date of publication of application: **12.05.2010**
(21) Application number: 09175035.6
(22) Date of filing: 04.11.2009
(51) Int. Cl.: E05F 15/04, E05F 15/12

(54) **Opening-and-closing drive device for opening-and-closing member for vehicle**

(30) Priority: 05.11.2008 JP 2008284596
(71) Applicant: AISIN SEIKI KABUSHIKI KAISHA, Kariya-shi, Aichi 448-8650 (JP)
(72) Inventor: Okada, Hiroki, Kariya-shi Aichi 448-8650 (JP); Fukumoto, Ryoichi, Kariya-shi Aichi 448-8650 (JP)
(74) Representative: TBK-Patent

(57) **Abstract**

An open ing-and-closing drive device for an opening-and-closing member for a vehicle includes an electric driving source (35) serving as a power source for opening and closing the opening-and-closing member (11, 70), which is supported by a vehicle body (10, 60, 150) so as to be opened and closed, an output portion (30, 72,139,175) connected to the electric driving source (35) and transmitting a driving force generated by the electric driving source (35) to the opening-and-closing member (11, 70) in order to open and close the opening-and-closing member (11, 70) via a connecting member (25, 26, 73, 154), and a clutch mechanism (40, 110) provided on a power transmission path between the electric driving source (35) and the output portion (30, 72, 139, 175) and including a viscous fluid (F, F1, F2) for transmitting a power between the electric driving source (35) and the output portion (30, 72, 139, 175) by viscosity.

## Description

### TECHNICAL FIELD

This disclosure generally relates to an opening-and-closing drive device for an opening-and-closing member for a vehicle.

### BACKGROUND DISCUSSION

Disclosed in JP2002-242532A is an opening-and-closing drive device for an opening-and-closing member for a vehicle (which will be hereinafter referred to as an opening-and-closing drive device), that drives an opening-and-closing member, such as a trunk lid, a back door, a slide door and the like mounted at a vehicle such as an automobile, to be opened and closed by means of an electrical driving source. The opening-and-closing drive device includes an output arm, which is rotatably driven by the electrical driving source (an electric motor) provided at a vehicle body, and a hinge arm, which connects the opening-and-closing member with the vehicle body so as to be opened and closed. The output arm and the hinge arm are connected to each other. A driving force generated by the electrical driving source is transmitted to the opening-and-closing member via the output arm and the like. Accordingly, the opening-and-closing member is actuated so as to be opened and closed.

Furthermore, the opening-and-closing drive device disclosed in JP2002-242532A further includes an electromagnetic clutch for establishing and interrupting a power transmission between the electrical driving source and the opening-and-closing member, so that the opening-and-closing member is manually opened and closed.

However, because the opening-and-closing drive device disclosed in JP2002-242532A uses the electromagnetic clutch, which establishes the power transmission by displacing a disk by means of a magnetic force, a magnetic material such as iron, which conducts the magnetic force therethrough, needs to be used for the electromagnetic clutch, which may result in increasing a mass of the electromagnetic clutch. Furthermore, because a relatively large coil, which generates the magnetic force, is used, the electromagnetic clutch is also enlarged. Additionally, a control circuit for electrifying the coil, interrupting power supply to the coil and controlling power supply to the coil needs to be provided at the opening-and-closing drive device. As a result, an entire configuration of the opening-and-closing drive device disclosed in JP2002-242532A may become complicated and manufacturing costs of the opening-and-closing drive device may be increased. Additionally, a battery load may be increased because electricity is consumed when the coil is electrified.

Additionally, the opening-and-closing drive device disclosed in JP2002-242532A increases an output (a motor output) of the electrical driving source by means of a speed reducing gear mechanism in order to obtain a necessary output. Therefore, for example, in a case where a force is applied to the opening-and-closing member in a direction opposite to an actuating direction while the opening-and-closing member is being actuated, a significant shock load may be generated at the opening-and-closing member and the like. In this case, because the opening-and-closing drive device disclosed in JP2002-242532A does not include a portion for absorbing the shock load, a sufficient strength needs to be ensured at each of the opening-and-closing member, the hinge arm, the output arm, a gear, the electrical driving source and the like in order to endure the shock load, so that a deformation and a damage do not occur at the opening-and-closing member, the hinge arm, the output arm, the gear, the electrical driving source and the like. As a result, each of the opening-and-closing member, the hinge arm, the output arm, the gear, the electrical driving source and the like may need to be increased in size, thickness and weight.

A need thus exists to provide an opening-and-closing drive device for an opening-and-closing member for a vehicle which has a simple and light configuration and which includes a clutch mechanism that transmits a force between an electrical driving source and the opening-and-closing member while allowing the opening-and-closing member to be manually opened and closed, and which absorbs a shock load to be generated when a force is applied to the opening-and-closing member in a direction opposite to an operating direction while the opening-and-closing member is being actuated.

### SUMMARY

According to an aspect of this disclosure, an opening-and-closing drive device for an opening-and-closing member for a vehicle includes an electric driving source serving as a power source for opening and closing the opening-and-closing member, which is supported by a vehicle body so as to be opened and closed, an output portion connected to the electric driving source and transmitting a driving force generated by the electric driving source to the opening-and-closing member in order to open and close the opening-and-closing member via a connecting member; and a clutch mechanism provided on a power transmission path between the electric driving source and the output portion and including a viscous fluid for transmitting a power between the electric driving source and the output portion by viscosity.

According to another aspect of this disclosure, the opening-and-closing drive device for the opening-and-closing member for the vehicle further includes a speed reduction gear mechanism connected to the electric driving source and an output shaft for supporting the output portion, wherein the clutch mechanism includes an input-side member connected to the deceleration mechanism and an output-side member connected to the output shaft and being connectable to the input-side member via the viscous fluid.

According to a further aspect of this disclosure, the speed reduction gear mechanism includes a first deceleration gear train, which is connected to the electric driving source and is rotatably supported by an intermediate shaft, and a second deceleration gear train, which is connected to the first deceleration gear train and is rotatably supported by the output shaft, and wherein the input-side member is connected to the second deceleration gear train.

According to a further aspect of this disclosure, the speed reduction gear mechanism includes a wheel gear supported by the output shaft so as to be rotatable relative to the output shaft, the input-side member includes a housing, which is fixed at the wheel gear so as to be rotated therewith as one unit, and the output-side member includes a rotor, which is accommodated within the housing together with the viscous fluid and is connected to the output shaft so as to be rotated therewith as one unit.

According to a further aspect of this disclosure, the opening-and-closing drive device for the opening-and-closing member for the vehicle further includes a speed reduction gear mechanism connected to the electric driving source and a rotating shaft supporting the output portion so as to be rotatable, wherein the clutch mechanism includes an input-side member connected to the speed reduction gear mechanism via the rotating shaft and an output-side member, which is connected to the output portion and which is connectable to the input-side member via the viscous fluid.

According to a further aspect of this disclosure, the clutch mechanism is arranged on the output shaft between the speed reduction gear mechanism and the output portion and is accommodated at the output portion.

According to a further aspect of this disclosure, the connecting member includes a string member connected to the opening-and-closing member and the output portion includes an output drum on which the string member is wound.

According to a further aspect of this disclosure, the connecting member includes a toothed portion connected to the opening-and-closing member and the output portion includes an output gear engaged with the toothed portion.

According to a further aspect of this disclosure, the connecting member includes an arm connected to the opening-and-closing member and the output portion includes an output shaft, which is rotated with the arm as one unit.

Accordingly, the clutch mechanism having the viscous fluid is actuated in a manner where the input member of the power transmission (a driving member) and the input member of the power transmission (a driven member), between which the viscous fluid is provided, start rotating relative to each other when the power transmitted between the electric driving source and the output member exceeds a predetermined level. A transmission torque transmitted to the clutch mechanism is increased or decreased in response to increase and decrease of a relative speed between the input-side member and the output-side member. Therefore, in a case where the opening-and-closing member is manually opened and closed, the opening-and-closing member is opened and closed in a manner where the input-side member and the output-side member, between which the viscous fluid is provided, are relatively rotated because the electric driving source is not actuated. However, when the relative speed (i.e. an opening-and-closing speed) is reduced, the transmission torque (a load torque) as a load is also reduced. As a result, the opening-and-closing member may be lightly opened and closed when being operated manually. On the other hand, in a case where the opening-and-closing member is opened and closed by the driving force generated by the electric driving source, the transmission torque is increased when increasing the relative speed, thereby obtaining a torque necessary for driving the opening-and-closing member to be opened and closed. Accordingly, the opening-and-closing drive device, which has a simple structure, allows the opening-and-closing member to be opened and closed by light operating force when being actuated manually and generates a torque necessary to open and close the opening-and-closing member when being operated by the driving force of the electric driving source.

Accordingly, even in a case where a force is applied to the opening-and-closing member in a direction opposite to an operating direction while the opening-and-closing member is being actuated, the input-side member and the output-side member, between which the viscous fluid is provided, of the clutch mechanism relatively rotate, and a reverse force is absorbed by the viscous fluid as a shearing force. As a result, a generation of a shock load may be reduced or avoided. Accordingly, a necessary strength of each of the opening-and-closing member, the connecting member, the output member and the electric driving source may be reduced, which may further result in reducing each of the opening-and-closing member, the connecting member, the output member and the electric driving source in size and thickness, so that a weight of the opening-and-closing drive device as a whole may be reduced.

Generally, in a case where an object is caught at the opening-and-closing member while being actuated and where a pinch detecting function is not provided at the opening-and-closing drive device, the electric driving source increases the driving force (which corresponds to an anti-pinch force) until an operation of the opening-and-closing member is locked. However, according to this disclosure, the operation of the opening-and-closing member is stopped and the input-side member and the output-side member, between which the viscous fluid is provided, of the clutch mechanism start rotating relative to each other, so that the driving force generated by the electric driving source is increased until the driving force of the electric driving source becomes equal to the load torque, which is increased in response to the increase of the relative speed. As a result, the anti-pinch force may be reduced. On the other hand, even in a case where the opening-and-closing drive device has the pinch detecting function, the relative speed is increased while shearing the viscous fluid when the driving force of the electric driving source is increased. Therefore, increasing speed of the transmission torque may be restricted. Therefore, for example, when assuming that a time necessary to detect a pinch (trap) of the object is constant, the driving force of the electric driving source generated when the pinch is detected, i.e. an anti-pinch force, may be reduced.

Accordingly, because the load torque to be generated when the relative speed is zero (0) is used as a retaining force for retaining a stopped state of the opening-and-closing member, the opening-and-closing member may be avoided from, for example, being opened and closed by its own weight on an inclined road. Alternatively, the opening-and-closing member may be stopped at any desired opened and closed position by using the retaining force.

Accordingly, even in the case where the retaining force is insufficient and the opening-and-closing member is manually opened and closed, the input-side member and the output-side member, between which the viscous fluid is provided, of the clutch mechanism rotate relative to each other because the electric driving source is not actuated, so that the relative speed is increased. As a result, because the load torque is increased, the increase of the opening-and-closing speed of the opening-and-closing member may be avoided. Accordingly, the opening-and-closing member is avoided from being rapidly opened and closed by its own weight.

Accordingly, when the force is manually applied to the opening-and-closing member in a direction corresponding to an opening and closing direction by a user while the opening-and-closing member is opened and closed by the driving force generated by the electric driving source, the relative speed is reduced so as to approximate to a rotational speed of the input-side member. As a result, the opening and closing speed of the opening-and-closing member is increased. Specifically, because the opening and closing speed of the opening-and-closing member is increased when reducing the relative speed, i.e. the load torque, an operating force necessary for manually operating the opening-and-closing member may be reduced,

Accordingly, the driving force generated by the electric driving source is well reduced by the first and second deceleration gear trans, and then, the decelerated driving force is transmitted to the input-side member. In a case where the relative rotation between the input-side member and the output-side member is set to be smaller than 360 degrees, for example, the inner space to be filled with the viscous fluid may be formed at either one of the input-side member and the output-side member, and the other one of the input-side member and the output-side member may include a vane portion for dividing the inner space in a circumferential direction and an orifice for establishing a communication between the divided inner spaces. Accordingly, the clutch mechanism may obtain a greater increasing and decreasing characteristic of the transmission torque relative to the relative speed.

According to a further aspect of this disclosure, the opening-and-closing drive device for the opening-and-closing member for the vehicle further includes an output shaft connected to the output portion so as to be rotated therewith as one unit and a speed reduction gear mechanism connected to the electric driving source via the clutch mechanism, wherein the speed reduction gear mechanism includes a wheel gear, which is connected to the output shaft so as to be rotated therewith as one unit, and a worm, which engages with the wheel gear, and wherein the clutch mechanism includes a housing, into which a rotating shaft of the electric driving source is fitted so as to rotate the housing together with the rotating shaft of the electric driving source as one unit, and a rotor, which is accommodated within the housing together with the viscous fluid and into which the worm is fitted so as to rotate the rotor and the worm as one unit.

Accordingly, the clutch mechanism is arranged at a position closer to the rotating shaft of the electric driving source relative to the worm, i.e. at a former stage of the speed reduction gear mechanism. Therefore, because the driving force, which is generated by the electric driving source and which is not yet increased by the speed reduction gear mechanism, is transmitted to the clutch mechanism, the necessary strength of the clutch mechanism (the housing and the rotor) may be reduced. As a result, the clutch mechanism may be reduced in size and thickness, which may further result in reducing the weight of the clutch mechanism as a whole.

According to a further aspect of this disclosure, the viscous fluid includes a magnetic viscous fluid whose viscosity is changeable, and the clutch mechanism includes an electromagnet for applying a magnetic field to the magnetic viscous fluid.

Accordingly, the viscosity of the magnetic viscous fluid may be changed in response to an application of the magnetic field to the magnetic viscous fluid by means of the electromagnet. As a result, the characteristic of the transmission torque (the load torque) of the clutch mechanism may be used in a wider range.

According to a further aspect of this disclosure, the viscous fluid includes an electroviscous fluid and the clutch mechanism includes an electrode for applying a voltage to the electroviscous fluid.

Accordingly, a viscosity of the electroviscous fluid may be changed in response to a voltage applied to the electroviscous fluid by means of the electrode. As a result, the characteristic of the transmission torque (the load torque) of the clutch mechanism may be used in a wider range.

Accordingly, the opening-and-closing drive device of the this disclosure, having a simple and light configuration, includes the clutch mechanism, which allows the power transmission between the electric driving source and the opening-and-closing member while allowing the manual opening and closing operation of the opening-and-closing member, and which absorbs the shock load generated when the force is applied to the opening-and-closing member in the direction opposite to the operating direction while the opening-and-closing member is being actuated.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a side view illustrating an opening-and-closing drive device for an opening-and-closing member for a vehicle according to a first embodiment;

Fig. 2 is an exterior view illustrating a driving unit;

Fig. 3 is a cross-sectional view illustrating the driving unit taken along line III-III;

Fig. 4 is a graph illustrating a relationship between a relative rotational speed and a torque;

Fig. 5 is a graph illustrating a relationship between a motor torque and a motor rotational speed;

Fig. 6 is a time chart illustrating a transition of the motor torque in a case where a pinch (trap) occurs;

Fig. 7 is a graph illustrating a relationship between the relative rotational speed and the torque;

Fig. 8 is a side view illustrating an opening-and-closing drive device for an opening-and-closing member for a vehicle according to a second embodiment;

Fig. 9 is a plane view illustrating the opening-and-closing drive device for the opening-and-closing member for the vehicle according to the second embodiment;

Fig. 10 is a cross-sectional view illustrating a driving unit;

Fig. 11 is a cross-sectional view illustrating a driving unit according to a third embodiment;

Fig. 12 is a partial cross-sectional view illustrating a driving unit according to a fourth embodiment;

Fig. 13 is a cross-sectional view illustrating a driving unit according to a fifth embodiment;

Fig. 14 is a cross-sectional view illustrating a driving unit according to a sixth embodiment;

Fig. 15 is a graph illustrating a relationship between the relative rotational speed and the torque;

Fig. 16 is a time chart illustrating a transition of a motor torque in the case where a pinch occurs;

Fig. 17 is a cross-sectional view illustrating a driving unit according to a seventh embodiment;

Fig. 18 is an opening-and-closing drive device for an opening-and-closing member for a vehicle according to a modified example;

Fig. 19 is an opening-and-closing drive device for an opening-and-closing member for a vehicle according to another modified example;

Fig. 20 is an opening-and-closing drive device for an opening-and-closing member for a vehicle according to a further modified example;

Fig. 21 is an opening-and-closing drive device for an opening-and-closing member for a vehicle according to a further modified example;

Fig. 22 is an opening-and-closing drive device for an opening-and-closing member for a vehicle according to a further modified example;

Fig. 23 is an opening-and-closing drive device for an opening-and-closing member for a vehicle according to a further modified example;

Fig. 24 is an opening-and-closing drive device for an opening-and-closing member for a vehicle according to a further modified example;

Fig. 25 is an opening-and-closing drive device for an opening-and-closing member for a vehicle according to a further modified example; and

Fig. 26 is an opening-and-closing drive device for an opening-and-closing member for a vehicle according to a further modified example.

### DETAILED DESCRIPTION

[First Embodiment]

A first embodiment of an opening-and-closing drive device for an opening-and-closing member for a vehicle (which will be hereinafter referred to simply as an opening-and-closing drive device), which is adapted as an opening-and-closing drive device for a luggage panel, will be described below with reference to the attached drawings.

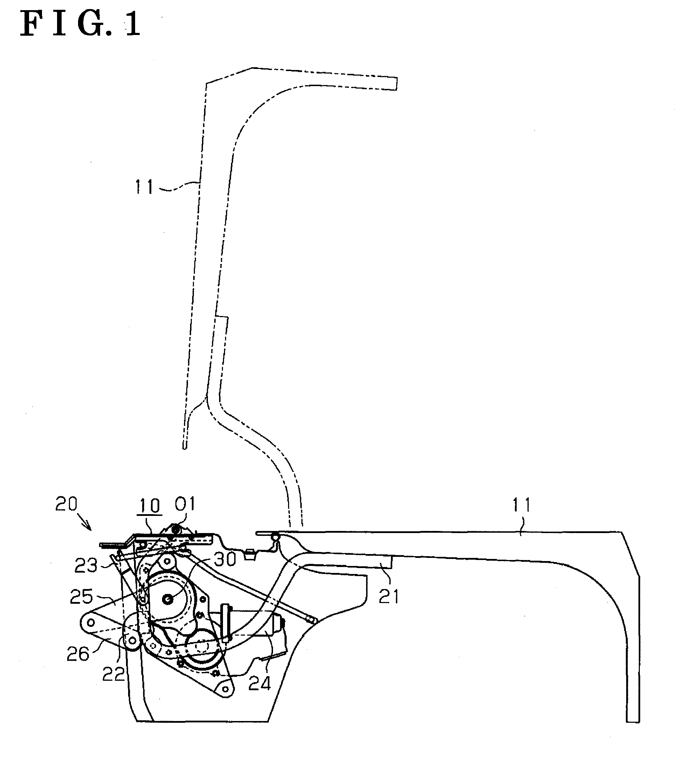

Illustrated in Fig. 1 is a side view of a rear end portion of a vehicle, such as an automobile, to which the opening-and-closing drive device is adapted. As illustrated in Fig. 1, a vehicle body 10, which defines a main body of the vehicle, includes an opening-and-closing mechanism 20. More specifically, a pair of opening-and-closing mechanisms 20 is provided at the vehicle body 10 at both end portions thereof in a vehicle width direction (i.e. in a direction orthogonal to a sheet of paper on which Fig. 1 is illustrated), respectively.

As illustrated in Fig. 1, each of the pair of the opening-and-closing mechanisms 20 includes a hinge arm 21, which is obtained by bending a bar material (i.e. a column-shaped material whose cross section is formed in a quadrangle) in a U-shape, and a torsion bar link 23. Furthermore, one of the pairs of the opening-and-closing mechanisms 20, which is provided at the left portion of the vehicle when being viewed from a back of the vehicle towards a front portion thereof, includes an attachment member 22, a driving unit 24, a first link 25 and a second link 26. The first link 25 and the second link 26 serve as an arm.

The hinge arms 21 are provided at the vehicle body 10 so as to freely rotatable about a rotating axis O1, which extends in the vehicle width direction. Furthermore, a luggage panel 11, which serves as an opening-and-closing member, is supported at end portions of the respective hinge arms 21. The luggage panel 11 is opened and closed in response to a rotation of the hinge arms 21 relative to the rotating axis O1.

The attachment member 22 is made of a metal plate, which is formed in a L-shape. For example, the attachment member 22 is fixed at the hinge arm 21 by welding. An end portion of the torsion bar link 23 is connected to the vehicle body 10 so as to be freely rotatable. The other end portion of the torsion bar link 23 is connected to the hinge arm 21 so as to be freely rotatable. The torsion bar link 23 biases the hinge arm 21 in a counterclockwise rotating direction in Fig. 1 in order to assist an opening operation of the luggage panel 11. In other words, the torsion bar link 23 generates an assisting force for opening the luggage panel 11.

The driving unit 24 is fixed at the vehicle body 10. Furthermore, the driving unit 24 rotates an output shaft 30, which serves as an output portion, in a clockwise rotating direction in Fig. 1 or in the counterclockwise rotating direction when the driving unit 24 is electrified. An end portion of the first link 25 is connected to the output shaft 30 so as to be rotated with the output shaft 30 as one unit. The other end portion of the first link 25 is connected to one end portion of the second link 26 so as to be freely rotatable. The other end portion of the second link 26 is connected to the attachment member 22 so as to be freely rotatable.

The hinge arm 21, which is fixed at the attachment member 22, the first link member 25 and the second link member 26 configure a quadric crank chain together with the vehicle body 10. Accordingly, the quadric crank chain, which is actuated when the driving unit 24 (i.e. the output shaft 30) is rotatably driven, allows the hinge arms 21 to be pushed and pulled via the first link 25, the second link 26 and the attachment member 22, thereby opening and closing the luggage panel 19, which is provided at the hinge arms 21. Additionally, the first link 25 and the like, which relates to a power transmission between the output shaft 30 and the hinge arms 21 (the luggage panel 11), configures a connecting member.

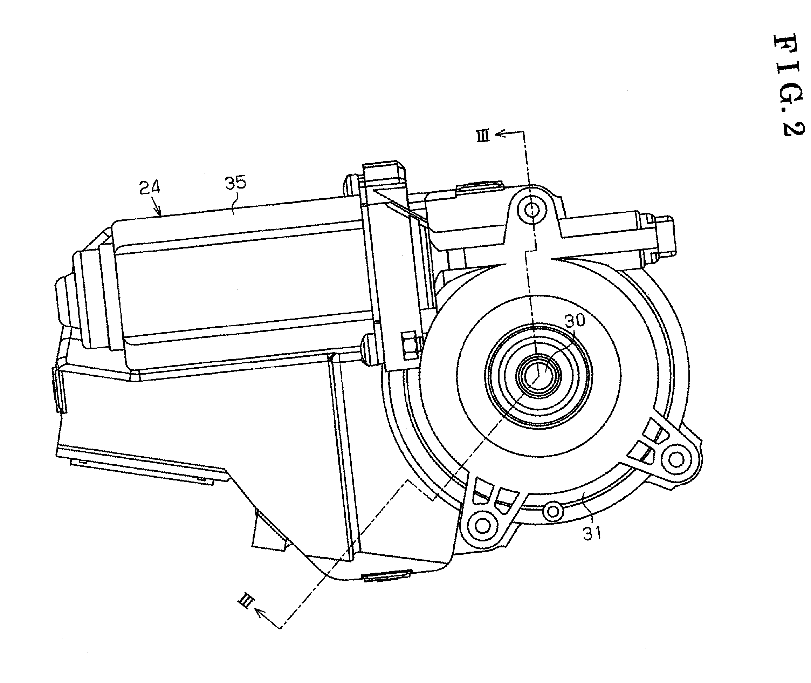

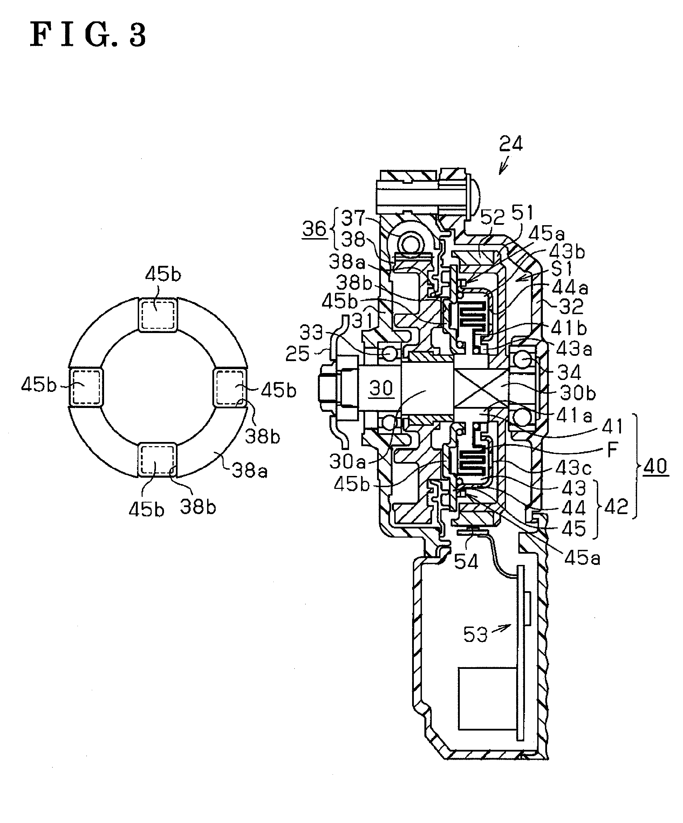

A detailed description of the driving unit 24 will be given below. Illustrated in Fig. 2 is a front view of the driving unit 24 when being viewed in an axial direction of the output shaft 30. Illustrated in Fig. 3 is a cross-sectional view of the driving unit 24 taken along line III-III in Fig. 2. As illustrated in Figs. 2 and 3, the driving unit 24 includes a housing 31 and a cover 32, which define an outer shape of the driving unit 24 and each of which is made of resin. The output shaft 30 is rotatably supported by first and second bearings 33 and 34, which are supported by the housing 31 and the cover 32 respectively, so as to be concentric with the first and second bearings 33 and 34. The first link 25 is connected to an end portion of the output shaft 30, which outwardly protrudes from the housing 31, so as to be rotated with the output shaft 30 as one unit. Additionally, the output shaft 30 is formed in a column shape having a step. More specifically, the output shaft 30 includes a shaft portion 30a, which is formed in a column shape, between the first bearing 33 and the second bearing 34 so that the shaft portion 30a is positioned closer to the first bearing 33 when comparing to the second bearing 34. Furthermore, the output shaft 30 includes a fitting portion 30b between the first bearing 33 and the second bearing 23 so that the fitting portion 30b, which is formed in a column shape whose cross sectional shape is formed in a quadrangle, is positioned closer to the second bearing 34 when comparing to the first bearing 33.

A speed reduction gear mechanism 36 and a clutch mechanism 40 are accommodated within an accommodating space S1, which is defined by the housing 31 and the cover 32. The speed reduction gear mechanism 36 includes a worm 37 and a worm wheel 38 (a wheel gear). The worm 37 is fixed at a rotating shaft (a motor shaft) of an electric motor 35 (see Fig. 2), which serves as an electric driving source. The worm wheel 38 is engaged with the worm 37 and is supported by the shaft portion 30a of the output shaft 30 so as to be freely rotatable. Accordingly, when power is supplied to the electric motor 35 and the electric motor 35 is rotatably driven, a rotation of the worm 37, which is rotated with the rotating shaft of the electric motor 35 as one unit, is transmitted to the worm wheel 38. As a result, the worm wheel 38 is rotated about the shaft portion 30a of the output shaft 30. The speed reduction gear mechanism 36 decelerates a rotational speed of the worm 37 in response to a transmission ratio established between the worm 37 and the worm wheel 38, so that the decelerated rotational speed is transmitted to the worm wheel 38.

The worm wheel 38 includes a protruding wall portion 38a, which protrudes towards the clutch mechanism 40 in the axial direction so as to form a cylinder shape and so as to face the clutch mechanism 40. As illustrated in a schematic exterior view of a portion of the speed reduction gear mechanism 36 in Fig. 3 when being viewed in the axial direction of the output shaft 30, the protruding wall portion 38a includes plural recessed portions 38b (in this embodiment, four recessed portions 38b) on a surface of the protruding wall portion 38a facing the clutch mechanism 40 while being spaced away therefrom so as to form equal angles between the neighboring recessed portions 38b.

The clutch mechanism 40 includes a rotor 41, which serves as an output-side member, and a housing 42, which serves as an input-side member. The rotor 41 includes a cylinder portion 41a formed in a cylinder shape and having a fitting bore, which is formed in a quadrangle and into which the fitting portion 30b is inserted. Furthermore, the rotor 41 includes a flange portion 41 b, which outwardly extends in a radial direction of the cylinder portion 41 a and whose cross sectional view is formed in a chaser-tooth shape.

The housing 42 includes a housing main body 43, a cover 44 and a base 45. The housing main body 43 includes a cylinder portion 43a, which is formed in a cylinder shape and whose inner diameter is set to be equal to an outer diameter of the cylinder portion 41a. Furthermore, the housing main body 43 includes a flange portion 43b, which outwardly extends from the cylinder portion 43a in a radial direction thereof and whose cross sectional view is formed in a chaser-tooth shape. Furthermore, the flange portion 43b is formed so that the chaser-tooth shape thereof alternates with the chase-tooth shape of the flange portion 41b, so that the flange portion 41 b and the flange portion 43b are engaged with each other while forming a slight clearance therebtween. The cylinder portion 41a is fluid-tightly inserted into the cylinder portion 43a of the housing main body 43. Furthermore, the flange portion 41 b is fitted with the flange portion 43b, so that the flange portion 43b is connected to the rotor 41 so as to be rotatable relative to the rotor 41. Additionally, the housing main body 43 includes plural protruding portions 43c protruding towards the second bearing 34 in the axial direction.

Each of the cover 44 and the base 45 is formed in an annular shape. The cover 44 is positioned closer to the second bearing 34 than the worm wheel 38. The base 45 is positioned closer to the worm wheel 38 than the second bearing 34. The cover 44 and the base 45 are arranged so as to face each other in the axial direction and are integrally connected by means of calks 45a at outer circumferential portions of the cover 44 and the base 45. The rotor 41 and the housing main body 43 are fluid-tightly accommodated within an inner space defined by the cover 44 and the base 45. Additionally, a clearance between the rotor 41 and the housing main body 43 is filled with a viscous fluid F. Accordingly, the housing 42 accommodates therein the rotor 41 together with the viscous fluid F.

The cover 44 includes plural fitting bores 44a, into which the respective protruding portions 43c are inserted, so as to penetrate the cover 44 in the axial direction. The base 45 includes plural protruding portions 45b, which are fitted into the respective recessed portions 38b, so as to protrude towards the worm wheel 38 in the axial direction. Accordingly, when the worm wheel 38 rotates about the shaft portion 30a (i.e. the output shaft 30), the housing main body 43 also rotates with the worm wheel 38 as one unit via the cover 44 and the base 45. Furthermore, the rotation of the housing main body 43 is transmitted to the rotor 41 by a viscosity of the viscous fluid F, although the rotor 41 is connected to the housing main body 43 so as to be rotatable relative to each other. Accordingly, the rotor 41 is rotated with the output shaft 30 as one unit.

A sensor rotor 51 is connected to the fitting portion 30b so as to be positioned between the rotor 41 and the second bearing 34 in the axial direction and so as to be rotatable with the output shaft 30 as one unit. The sensor rotor 51 is formed in a cylinder shape having a cover portion so as to surround and cover the clutch mechanism 40. A ring magnet 52 is fixed at a radially outer circumferential surface of the sensor rotor 51. The ring magnet 52 includes plural N-poles and S-poles in an alternate manner in a circumferential direction of the ring magnet 52. An electronic control unit 53 (which will be hereinafter referred to as an ECU 53) is accommodated within the accommodating space S1. Plural hall sensors 54 are arranged at a radially outer position relative to the ring magnet 52 at regular intervals while being spaced away from the ring magnet 52. Furthermore, the hall sensors 54 are electrically connected with the ECU 53. The hall sensors 54 detect a rotational position and a rotational speed of the output shaft 30, which is rotated with the ring magnet 52 as one unit, so that the detection result of the hall sensors 54 is used for detecting opening and closing positions of the luggage panel 11. and opening and closing speeds of the luggage panel 11.

When the electric motor 35 is rotatably driven, the rotation of the worm 37 is transmitted to the worm wheel 38, so that the worm wheel 38 rotates about the shaft portion 30a (the output shaft 30). Accordingly, the housing 42 is rotated with the worm wheel 38 as one unit. Furthermore, the rotation of the housing 42 (the housing main body 43) is transmitted to the rotor 41 via the viscous fluid F, so that the rotor 41 is rotated with the output shaft 30 as one unit. The rotation of the output shaft 30 is transmitted to the luggage panel 11 via the first link 25 and the like, thereby opening and closing the luggage panel 11.

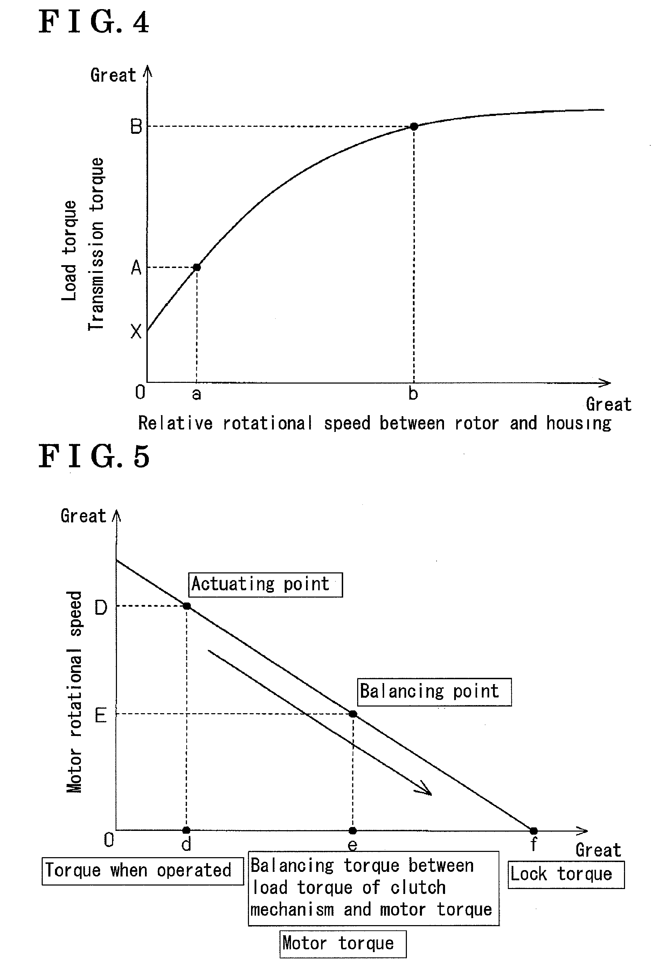

A characteristic and a function of the clutch mechanism 40 will be described below. The clutch mechanism 40 according to the first embodiment includes the rotor 41, which serves as a connecting portion to the luggage panel 11, and the housing 42 (the housing main body 43), which serves as a connecting portion to the electric motor 35, so that the rotor 41 and the housing 42 are connected by means of the viscous fluid F. Therefore, as illustrated in Fig. 4, the rotor 41 and the housing 42 start rotating relative to each other when a transmission torque between the rotor 41 and the housing 42 exceeds a predetermined transmission torque X. The transmission torque is increased and decreased in response to an increase and a decrease of a relative speed (a relative rotational speed) at that time.

<Transmission function>

In a case where the luggage panel 11 is manually opened and closed, the rotor 41 and the housing 42 of the clutch mechanism 40 are rotated relative to each other in order to open and close the luggage panel 11 because the electric motor 35 does not rotate. Therefore, when decreasing a relative speed a (i.e. an opening-and-closing speed a), a transmission torque A (i.e. a load torque A, a load) also decreases. Accordingly, the luggage panel 11 is manually opened and closed without applying a relatively large force thereto. On the other hand, in a case where the luggage panel 11 is opened and closed by means of a driving force generated by the electric motor 35, a transmission torque B is increased when increasing a relative speed b (i.e. an opening-and-closing speed b), so that a torque necessary for opening and closing the luggage panel 11 is obtained. Accordingly, although the clutch mechanism 40 of the opening-and-closing drive device has a simple configuration that uses the viscous fluid F, the luggage panel 11 is opened and closed with relatively light operating force when being operated manually, and the torque necessary for opening and closing the luggage panel 11 is obtained when being opened and closed by means of the driving force generated by the electric motor 35. In other words, the clutch mechanism 40 has the simple configuration, yet, the clutch mechanism 40 has a function similar to a electromagnetic clutch. Furthermore, because resin is used for a portion of the clutch mechanism 40, a weight and a size of the clutch mechanism 40 may be reduced. Furthermore, a control circuit for the clutch mechanism 40 is not necessary. As a result, manufacturing costs of the clutch mechanism 40 may be reduced. Additionally, because electricity does not need to be supplied to the clutch mechanism 40, a battery load may be reduced.

<Absorption function>

Even in a case where a force is applied to the luggage panel 11 in a direction opposite to an operating direction while the luggage panel 11 is being operated, the force is absorbed by the viscous fluid F as a shearing force because the rotor 41 and the housing 42 of the clutch mechanism 40 rotate relative to each other. As a result, a generation of a shock load (an impact load) may be reduced or avoided. Accordingly, a necessary strength of the luggage panel 11 and the opening-and-closing mechanism 20 (i.e. the hinge arms 21 and the like) may be reduced, which may further result in reducing a size and thickness of each component and reducing the weight of the opening-and-closing drive device as a whole. Alternatively, a portion of the opening-and-closing mechanism 20 may be made of resin.

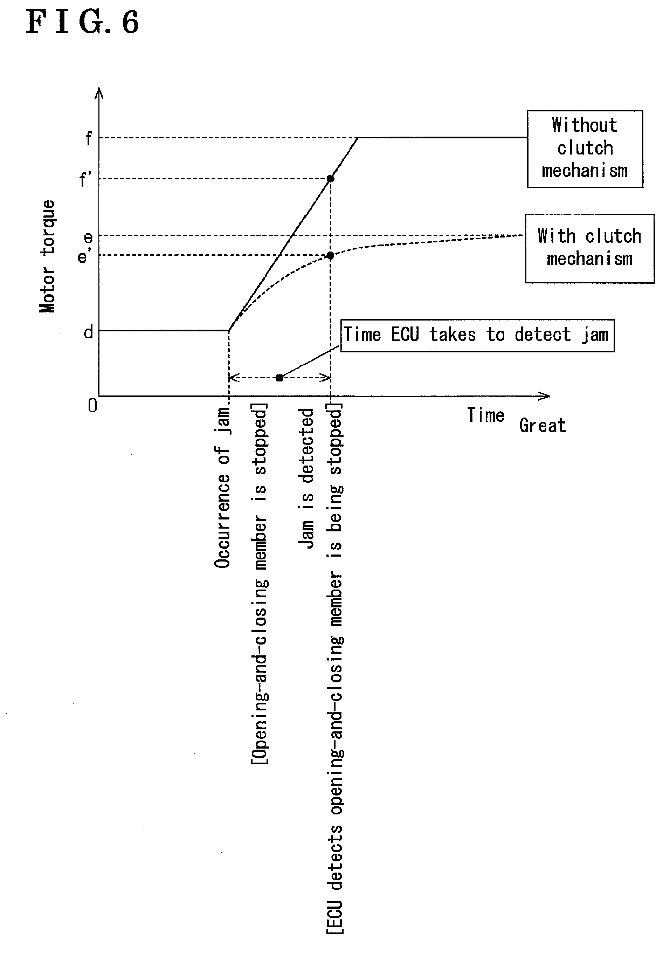

As illustrated in Figs. 5 and 6, in a case where an object is caught at the luggage panel 11 while being operated and in a case where a pinch detecting function is not provided at the luggage panel 11,a motor torque of the electric motor 35 reaches a lock torque f, by which the rotation of the electric motor 35 is locked, if the clutch mechanism 40 is not provided at the driving unit 24, which may result in generating an excessive anti-pinch force in response to the lock torque f. However, because the clutch mechanism 40 is provided at the driving unit 24 in this embodiment, even if the motor torque increases towards the lock torque f, the rotation of the rotor 41, which serves as the connecting portion of the luggage panel 11, is stopped and the housing 42 and starts rotating relative to the rotor 41. As a result, an increase of the motor torque is stopped at a point (i.e. a motor rotational speed E, a motor torque e) where the motor torque is balanced against the load torque, which increases in response to the increase of the relative speed. Accordingly, the motor torque does not reach the lock torque f, which may further result in reducing the anti-pinch force.

<Absorption function>

On the other hand, in a case where the object is caught at the luggage panel 11 while being operated and in a case where a known pinch detecting function (see e.g. JP2002-194947A) is provided at the luggage panel 11, the motor torque is increased rapidly towards the lock torque f if the clutch mechanism 40 is not provided at the driving unit 24. However, according to the first embodiment, because the clutch mechanism 40 is provided at the driving unit 24, the relative speed is increased while shearing the viscous fluid F. As a result, an increasing speed of the transmission torque may be restricted. Therefore, for example, assuming that a time necessary for detecting a pinch (trap) of the object at the luggage panel 11 (i.e. a time between when the pinch (trap) occurs and when the pinch of the object is detected, in other words, a time between when a luggage panel 11 is stopped and a time when the ECU 53 detects that the luggage panel 11 is stopped) is constant, the motor torque to be generated when the pinch of the object is detected, i.e. the anti-pinch force, may be reduced.

<Free stop function>

Furthermore, in a case where the load torque (the transmission torque X) generated when the relative speed between the rotor 41 and the housing 42 is zero (0) is used as a retaining force for retaining the luggage panel 11 in a stopped state, for example, the luggage panel 11 may be avoided being opened and closed by its own weight while the vehicle is on a inclined road, or the luggage panel 11 may be avoided being opened and closed due to the assisting force generated by the torsion bar link 23 by means of the load torque in conjunction with a stopping torque Y (a cogging torque) of the electric motor 35. Alternatively, the luggage panel 11 may be stopped at any desired opened and closed position in a case where a torque, which is obtained by adding the load torque (X) to the stopping torque Y, is set to be greater than a torque for opening and closing the luggage panel 11 by means of its own weight or the assisting force generated by the torsion bar link 23.

<Motion slowing function>

Furthermore, even if the luggage panel 11 is rapidly opened and closed by its own weight on the inclined road soon after a door lock mechanism for retaining the luggage panel 11 to be in a closed state is released on the inclined road in a case where the luggage panel 11 is manually opened and closed while the transmission torque X (the retaining force) is insufficient, or even if the luggage panel 11 is rapidly opened and closed so as to exceed a turn-over point, at which the assisting force of the torsion bar link 23 is rapidly weakened, or even if the luggage panel 11 is rapidly closed when a mass of snow falls on the luggage panel 11, the electric motor 35 does not rotate, i.e. the electric motor 35 is stopped by its own cogging torque. Accordingly, the rotor 41 and the housing 42 of the clutch mechanism 40 rotate relative to each other, thereby increasing the relative speed. As a result, the load torque increases, which may further result in avoiding the increase of the opening-and-closing speed of the luggage panel 11.

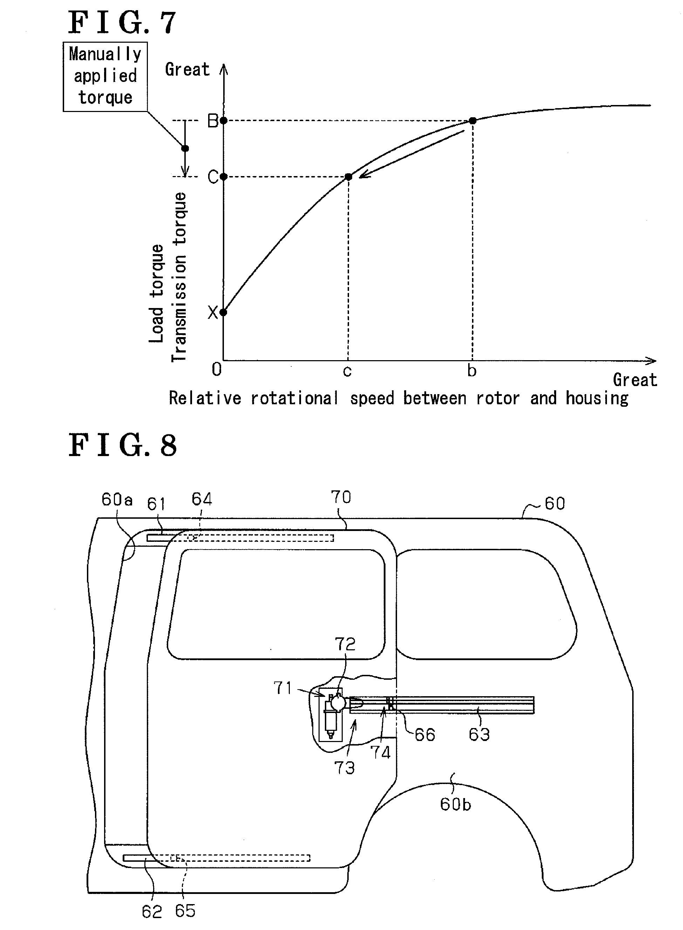

As illustrated in Fig. 7, when a user manually applies a force to the luggage panel 11 in the opening-and-closing direction so as to be consistent with the operating direction of the luggage panel 11 in order to increase the opening-and-closing speed of the luggage panel 11 in the case where the luggage panel 11 is opened and closed by means of the driving force generated by the electric motor 35, the rotational speed of the rotor 41, which serves as the connecting portion to the luggage panel 11, is reduced so as to be approximate to the rotational speed of the housing 42 (i.e. the relative speed is reduced), so that the opening-and-closing speed of the luggage panel 11 is increased. Specifically, because the opening-and-closing speed of the luggage panel 11 is increased due to the decrease of the relative speed, i.e. the decrease of the load torque, the operating force necessary for manually opening and closing the luggage panel 11 may be reduced.

According to the first embodiment, the following advantages and merits are achievable. The clutch mechanism 40 of the opening-and-closing drive device according to the first embodiment has a simple configuration and is light in weight, yet the clutch mechanism 40 transmits the power between the electric motor 35 and the luggage panel 11 while allowing the luggage panel 11 to be manually opened and closed. Furthermore, the clutch mechanism 40 absorbs the shock load, which is to be generated when the force is applied to the luggage panel 11 in the direction opposite to the operating direction while being operated. Moreover, the clutch mechanism 40 may function as a mechanism for transmitting the power, absorbing the load and generating the load. More specifically, because the clutch mechanism 40 is configured so as to absorb the shock load, each component relating to the power transmission may be made of resin and may be reduced in thickness and weight. Furthermore, the clutch mechanism 40 reduces the anti-pinch force, so that the opening-and-closing drive device is reduced in weight and size and the manufacturing costs of the opening-and-closing drive device may be reduced when comparing to a case where the electromagnetic clutch is adapted instead of the clutch mechanism 40. Additionally, the free-stop function, the motion slowing function, a manual operation function in the case where the luggage panel 11 is automatically opened and closed, and the like may be added to the opening-and-closing drive device.

[Second embodiment]

A second embodiment of the opening-and-closing drive device, which is adapted as an opening-and-closing drive device of a slide door, will be described below with reference to the attached drawings.

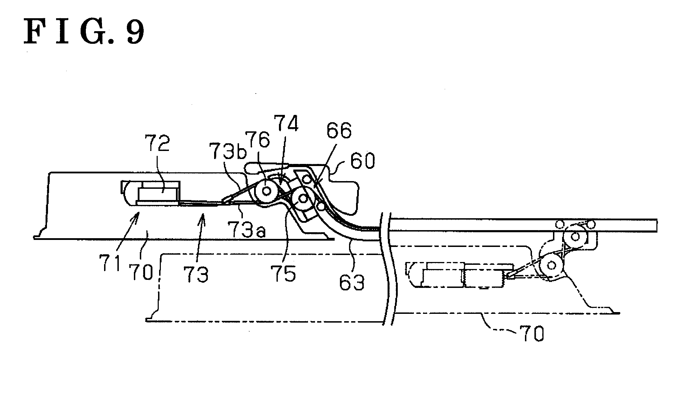

Illustrated in Fig. 8 is a side view of a vehicle, such as an automobile, to which the opening-and-closing drive device is adapted. Illustrated in Fig. 9 is a plane view of the opening-and-closing drive device. As illustrated in Fig. 8, a vehicle body 60 includes an upper rail 61 and a lower rail 62, which extend in a front-rear direction along an upper edge portion and a lower edge portion, respectively, of a door opening 60a, which is formed at a side portion of the vehicle body 60. A center rail 63 is provided at a quarter panel 60b, which is provided at a rear portion of the vehicle door 60 relative to the door opening 60a, so as to extend in the front-rear direction. A slide door 70, which serves as the opening-and-closing member, is supported at the upper rail 61, the lower rail 62 and the center rail 63 via first, second and third guide roller units 64, 65 and 66, respectively, so as to be movable in the front-rear direction.

A driving unit 71 is fixed at the slide door 70. The driving unit 71 rotates an output drum 72, which serves as an output portion, in a clockwise direction and a counterclockwise direction in Fig. 9 when a power is supplied to the driving unit 71. An end portion of a first wire 73a and an end portion of a second wire 73b of a cable 73 (a connecting member, a string member) are engaged with the output drum 72, so that the first and second wires 73a and 73b are wound around the output drum 72. The first wire 73a is guided to a pulley mechanism 74, which is provided at the third guide roller unit 66 and is led into the center rail 63, so that the other end portion of the first wire 73a is engaged at a rear end portion of the center rail 63. The second wire 73b is guided to the pulley mechanism 74 and is led into the center rail 63, so that the other end portion of the second wire 73b is engaged at a front end portion of the center rails 63, Additionally, the cable 73 may be configured with one wire, which is wound around the output drum 72 and whose both end portions are fixed at respective predetermined portions of the vehicle body 60, instead of the first and second wires 73a and 73b.

The pulley mechanism 74 includes a pair of guide pulleys 75 and 76 (i.e. first and second guide pulleys 75 and 76), which are supported by the third guide roller unit 66 so as to be freely rotatable. The other end portions of the first and second wires 73a and 73b are guided to the first and second guide pulleys 75 and 76, respectively, so as to be crossed between the first and second guide pulleys 75 and 76, and then, the other end portions of the respective first and second wires 73a and 73b are led into the center rails 63.

When the driving unit 71 (the output drum 72) is rotatably driven in one direction in a case where the slide door 70 is in a closed state as illustrated by a solid line in Fig. 9, the first wire 73a of the cable 73 is wound around the output drum 72, and the second wire 73b is reeled out from the output drum 72. In this case, because the other end portion of the first wire 73a and the other end portion of the second wire 73b are fixed at the vehicle body 60, the second pulley 76 moves the third guide roller unit 66 towards a rear portion of the vehicle along the center rail 63 so as to slide relative to the center rail 63. As a result, the slide door 70 is slidably moved in an opening direction (to the right in Fig. 9) as illustrated by a chain double-dashed line in Fig. 9.

On the other hand, when the driving unit 71 (the output drum 72) is rotatably driven in the other direction while the slide door 70 is in an opened state, the second wire 73b of the cable 73 is wound around the output drum 72 and the first wire 73a is reeled out from the output drum 72. Accordingly, the first guide pulley 75 moves the third guide roller unit 66 towards a front portion of the vehicle along the center rail 63 so as to slide relative to the center rail 63. As a result, the slide door 70 is slidably operated in a closing direction (to the left in Fig. 9).

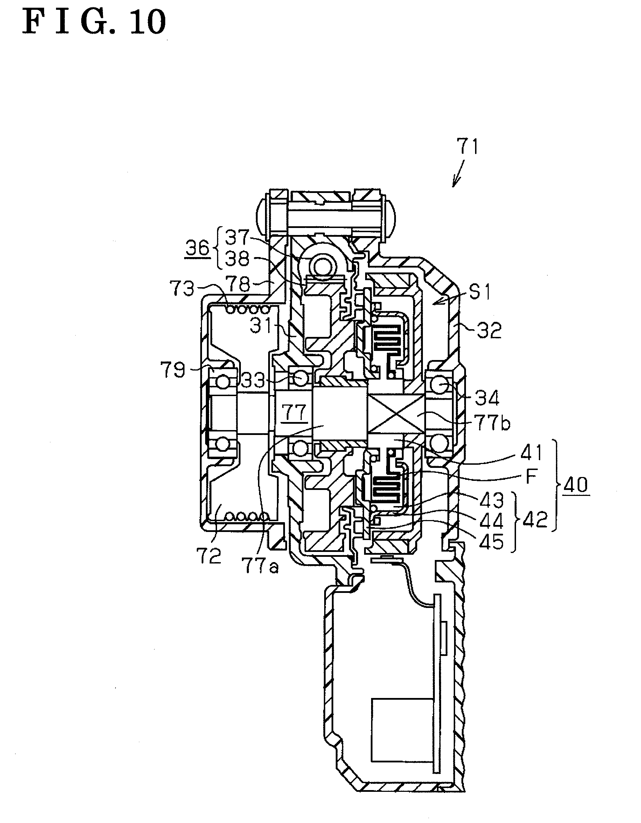

As illustrated in Fig. 10, the driving unit 71 according to the second embodiment differs from the driving unit 24 of the first embodiment in that the driving unit 71 includes an output shaft 77 for supporting the output drum 72 instead of the first link 25 of the driving unit 24. The output shaft 77 includes a shaft portion 77a, which corresponds to the shaft portion 30a, for supporting the worm wheel 38 so as to be rotatable. Furthermore, the output shaft 77 includes a fitting portion 77b, which corresponds to the fitting potion 30b and to which the rotor 41 and the sensor rotor 51 are connected so as to be rotatable with the fitting portion 77b as one unit. The output drum 72 is connected at an end portion of the output shaft 77, which outwardly protrudes from the housing 31, so as to be rotated with the output shaft 77 as one unit.

A drum cover 78 for accommodating the output drum 72 is connected to the housing 31 together with the cover 32. A bearing 79 for supporting an end portion of the output shaft 77 penetrating and protruding from the output drum 72 so as to be freely rotatable is retained by the drum cover 78.

When the electric motor 35 (see Fig. 2) is rotatably driven, the rotation of the worm 37 is transmitted to the worm wheel 38, so that the worm wheel 38 rotates about the shaft portion 77a (the output shaft 77). Accordingly, the housing 42 is rotated with the worm wheel 38 as one unit: Furthermore, the rotation of the housing 42 (the housing main body 42) is transmitted to the rotor 41 via the viscous fluid F, so that the rotor 41 is rotated with the output shaft 77 as one unit. A rotation of the output shaft 77 is transmitted to the vehicle body 60 via the output drum 72 and the like, then the slide door 70, which is supported at the vehicle body 60, is opened and closed.

According to the second embodiment, advantages and merits similar to the first embodiment are achievable.

[Third embodiment]

A third embodiment of the opening-and-closing drive device, which is adapted as an opening-and-closing drive device for a luggage panel, will be described below with reference to the attached drawing. The opening-and-closing drive device according to the third embodiment differs from the opening-and-closing drive device according to the first embodiment in that a driving unit for driving the luggage panel 11 to be opened and closed is modified. Other configurations of the opening-and-closing drive device according to the third embodiment are similar to the opening-and-closing drive device of the first embodiment. Therefore, only differences between the first and third embodiments will be described below,

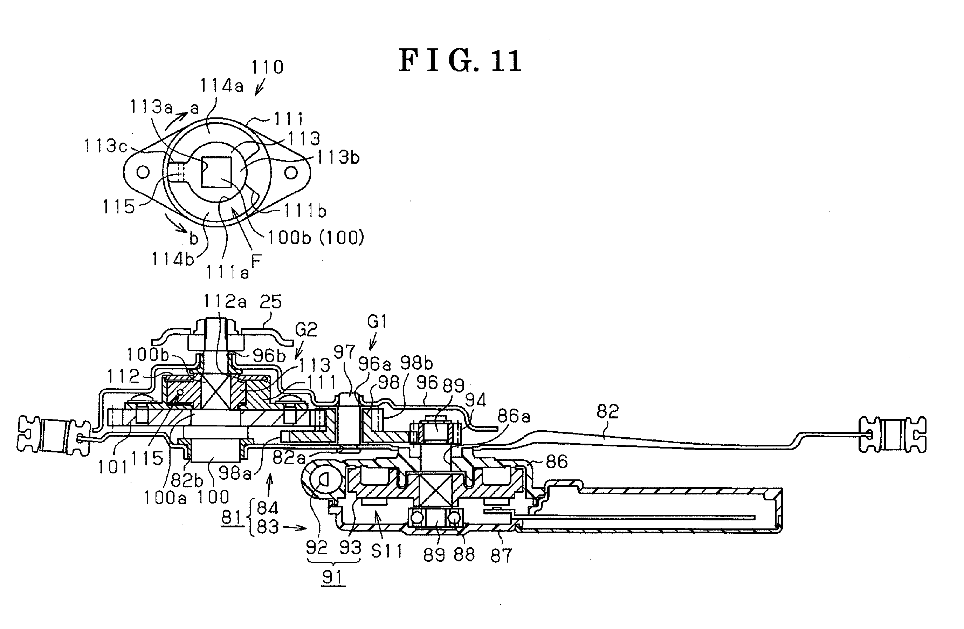

Illustrated in Fig. 11 is a cross-sectional view of a driving unit 81 according to the third embodiment. As illustrated in Fig. 11, the driving unit 81 is connected to the vehicle body 10 by means of a bracket 82, which is made of, for example, a metal plate. Furthermore, the driving unit 81 includes a driving portion 83 and a transmitting portion 84, which are supported by the bracket 82.

The driving portion 83 includes a housing 86 and a cover 87, which define an outer shape of the driving portion 83 and each of which is made of resin. Furthermore, a first output shaft 89 is rotatably supported at the driving portion 83 by means of a bearing bore 86a, which is formed at the housing 86, and a bearing 88, which is retained by the cover 87. The bearing bore 86a and the bearing 88 are provided so as to be concentric with each other.

A speed reduction gear mechanism 91 is accommodated within an accommodating space S11, which is defined by the housing 86 and the cover 87. The speed reduction gear mechanism 91 includes a worm 92 and a worm wheel 93 (a wheel gear). The worm 92 is fixed at the rotating shaft of the electric motor 35 (see Fig. 2). The worm wheel 93 is engaged with the worm 92 and is connected to the first output shaft 89 so as to be rotatable therewith as one unit. Accordingly, when the power is supplied to the electric motor 35 and the electric motor 35 is rotatably driven, a rotation of the worm 92, which is rotated with the rotating shaft of the electric motor 35 as one unit, is transmitted to the worm wheel 93, so that the worm 92 is rotated together with the first output shaft 89. Then, the speed reduction gear mechanism 91 decelerates a rotational speed of the worm 92 in response to a transmission ratio established between the worm 92 and the worm wheel 93, so that the decelerated rotational speed is transmitted to the worm wheel 93 (and the first output shaft 89). Additionally, a gear 94, whose diameter is well smaller than a diameter of the worm wheel 93, is connected at an end portion of the first output shaft 89, which outwardly protrudes from the housing 86 and the bracket 82, so as to be rotated with the first output shaft 89 as one unit.

The transmitting portion 84 includes a holder 96, which is arranged at a position opposite from the driving portion 83 relative to the bracket 82 and which is made of, for example, a metal plate. Bearing bores 82a and 96a are formed at the bracket 82 and the holder 96, respectively, so as to be concentric with each other. Both end portions of a supporting shaft 97, which serves as an intermediate shaft and which extends in parallel with the first output shaft 86, are supported by the bearing bores 82a and 96a, respectively, while allowing the supporting shaft 97 to be freely rotated. A dual gear 98 is connected to the supporting shaft 97 so as to be rotatable therewith as one unit and so as to be sandwiched between the bracket 82 and the holder 96. The dual gear 98 integrally includes a first gear portion 98a and a second gear portion 98b. The first gear portion 98a is formed so that a diameter thereof is set to be well greater than the diameter of the gear 94. Furthermore, the first gear portion 98a is engaged with the gear 94. The second gear portion 98b is formed so that a diameter thereof is set to be well smaller than the first gear portion 98a. The dual gear 98 is rotated when the rotation of the gear 94 (the first output shaft 89) is transmitted thereto. In this case, the dual gear 98 further decelerates a rotational speed of the gear 94 in response to a transmission ratio established between the gear 94 an the first gear portion 98a. Additionally, the dual gear 98, which is engaged with the gear 94 and which decelerates the rotational speed of the gear 94, configures a first deceleration gear train G1.

Bearing bores 82b and 96b are formed at the bracket 82 and the holder 96, respectively so as to be concentric with each other. Both end portions of a second output shaft 100, which serves as an output shaft extending in parallel with the first output shaft 89 and the supporting shaft 97, are supported by the bearing bores 82b and 96b, respectively, while allowing the second output shaft 100 to be freely rotated. The first link 25 is connected to an end portion of the second output shaft 100, which outwardly extends from the holder 96, so as to be rotatable with the output shaft 100 as one unit.

The second output shaft 100 is formed in a column shape having a stepped portion. More specifically, the second output shaft 100 includes a shaft portion 100a, which is formed in a column shape, between the bracket 82 and the holder 96 so as to be positioned closer to the bearing bore 82b when comparing to the bearing bore 96b. Furthermore, the second output shaft 100 includes a fitting portion 100b, which is formed in a column shape whose cross-sectional shape is formed in a quadrangle, between the bracket 82 and the holder 96 so as to be positioned closer to the bearing bore 96b when comparing to the bearing bore 82b. A gear 101 is rotatably supported by the shaft portion 100a. The gear 101 is formed to have a well greater diameter than the diameter of the second gear portion 98b and is engaged with the second gear portion 98b. Accordingly, when the rotation of the second gear portion 98b (the dual gear 98) is transmitted to the gear 101, the gear 101 rotates about the second output shaft 100. In this case, the gear 101 further decelerates a rotational speed of the second gear portion 98b in response to a transmission ratio established between the second gear portion 98b and the gear 101. In other words, the rotational speed of the first output shaft 89 (the worm wheel 93) is decelerated between the gear 94 and the first gear portion 98a, and then, the rotational speed of the first output shaft 89 is further decelerated between the second gear portion 98b and the gear 101, so that the gear 101 is rotated by the decelerated rotational speed. Additionally, the gear 101, which is engaged with the first gear portion 98a and which decelerates the rotational speed of the first gear portion 98a, configures a second deceleration gear train G2.

A clutch mechanism 110 is accommodated within a space formed between the holder 96 and the gear 101. The clutch mechanism 110 includes a housing 111, a cover 112 and a rotor 113. The housing 111 is connected to the gear 101, serves as an input-side member and is formed in a cylinder shape having a bottom cover. The cover 112 closes an opening of the housing 111 in a fluid-tight manner. The rotor 113 serves as an output-side member and is accommodated within an inner space defined by the housing 111 and the cover 112.

As illustrated by an exterior view of the clutch mechanism 110 in Fig. 11 when being viewed in an axial direction of the second output shaft 100, a bearing bore 111a, which is formed in a circular shape and into which the fitting portion 100b is inserted, is formed at the bottom cover of the housing 111. Furthermore, a partition wall 111b is formed on a side wall of the housing 111 within a predetermined angle range. More specifically, the partition wall 111b is formed in a sector shape whose inner diameter is set to be greater than an inner diameter of the bearing bore 111a and which protrudes towards a center portion of the clutch mechanism 110. Furthermore, a bearing bore 112a, formed in a circular shape similar to the bearing bore 111a, is formed at the cover 112, so that the fitting portion 100b is freely inserted into the bearing bore 112a.

The rotor 113 includes a fitting bore 113a, which is formed in a quadrangle shape and into which the fitting portion 100b is fittedly inserted. Furthermore, the rotor 113 includes a shaft portion 113b, which is rotatably supported by the bearing bores 111a and 112a in a fluid-tight manner. The rotor 113 has an enlarged diameter so that the shaft portion 113b thereof slidably contacts an inner circumferential surface of the partition wall 111b between the bottom cover of the housing 111 and the cover 112. Furthermore, the rotor 113 includes a vane portion 113c, which radially-outwardly protrudes within a predetermined angle range of the enlarged portion of the rotor 113 so as to slidably contact the inner circumferential surface of the housing 111. Accordingly, a relative rotational amount between the housing 111 and the rotor 113 (the second output shaft 100), which are rotated with the gear 101 as one unit, is set to fall within a range until the vane portion 113c contacts an opposing surface of the partition wall 111 b, i.e. within a range smaller than 360 degrees.

An inner space defined by the housing 111 and the cover 112 is divided into two by means of the vane portion 113c. More specifically, the rotor 113 includes a first fluid chamber 114a extending at one side of the vane portion 113c (i.e. so as to extend in a clockwise direction relative to the vane portion 113c in Fig. 11) and a second fluid chamber 114b extending at the other side of the vane portion 113c (i.e. so as to extend in the counterclockwise direction relative to the vane portion 113c). The first and second fluid chambers 114a and 114b are filled with the viscous fluid F, e.g. viscous oil. Furthermore, an orifice 115 is formed at the vane portion 113c so as to establish a communication between the first and second fluid chambers 114a and 114b via the orifice 115.

Accordingly, when the rotor 113 is rotated in a direction indicated by an arrow a in Fig. 11 or when the housing 111 is rotated in a direction indicated by an arrow b, the viscous fluid F, which is provided within the clutch mechanism 110, is about to move from the first fluid chamber 114a to the second fluid chamber 114b via the orifice 115. However, because a fluid channel (a bore diameter) of the orifice 115 is formed to be small, a sufficient flow of the viscous fluid F is not likely to be ensured. Therefore, the viscous fluid F is compressed within the first fluid chamber 114a, thereby generating the transmission torque (the load torque) between the rotor 113 and the housing 111.

On the other hand, even in a case where the rotor 113 is rotated in the direction indicated by the arrow b or in the case where the housing 111 is rotated in the direction indicated by a, the viscous fluid F is compressed within the second fluid chamber 114b, thereby generating the transmission torque (the load torque) between the rotor 113 and the housing 111.

Accordingly, as is the case with the clutch mechanism 40, the clutch mechanism 110 of the third embodiment increases and decreases the transmission torque (the load torque) in response to the increase and decrease of the relative speed (the relative rotational speed) between the rotor 113 and the housing 111 (see Fig. 4). Specifically, the clutch mechanism 110 having the orifice 115 enhanced the above-described characteristic of the transmission torque or the load torque when comparing to the clutch mechanism 40. Accordingly, the clutch mechanism 110 obtains further advantages and merits relating to the rotational transmission and the like. Additionally, the characteristic of the transmission torque and the load torque may be easily changed by modifying the fluid channel (the bore diameter) of the orifice 115 or by changing a viscosity of the viscous fluid F.

According to the third embodiment, when the electric motor 35 is rotatably driven, the rotation of the worm 92 is transmitted to the worm wheel 93, thereby rotating the worm wheel 93. Then, the first output shaft 89 and the gear 94 are rotated with the worm wheel 93 as one unit. Furthermore, the rotation of the gear 94 is transmitted to the dual gear 98 (the first gear portion 98a), thereby rotating the dual gear 98. Then, the rotation of the dual gear 98 (the second gear portion 98b) is transmitted to the gear 101, thereby rotating the housing 111 with the gear 101 as one unit. The rotation of the housing 111 is transmitted to the rotor 113 via the viscous fluid F, thereby rotating the output shaft 100 with the rotor 113 as one unit. The rotation of the second output shaft 100 is transmitted to the luggage panel 11 via the first link 25 and the like, thereby opening and closing the luggage panel 11.

According to the third embodiment, the clutch mechanism 110 is provided at the second output shaft 100, which serves as a final stage of deceleration of the transmitting portion 84. Furthermore, the relative rotational amount between the housing 111 and the rotor 113 is set to be smaller than 360 degrees. Accordingly, no negative influence is likely to affect the clutch mechanism 110 using the orifice 115.

According to the third embodiment, the opening-and-closing drive device achieves the following advantages and merits in addition to the advantages and merits similar to the first embodiment. According to the third embodiment, the rotation of the electric motor 35 is well decelerated via the first and second deceleration gear trains G1 and G2, so that the decelerated rotation is transmitted to the housing 111. Furthermore, because the relative rotational amount between the housing 111 and the rotor 113 is set to be smaller than 360 degrees and the clutch mechanism 110 having the orifice 115 is adapted to the opening-and-closing drive device, an increasing and decreasing characteristic of the transmission torque relative to the relative speed may be further enhanced.

[Fourth embodiment]

A fourth embodiment of an opening-and-closing drive device will be described below with reference to the attached drawing. The opening-and-closing drive device according to the fourth embodiment differs from the opening-and-closing drive device according to the first and second embodiments in that the clutch mechanism 40 is provided at the rotating shaft of the electric motor instead of the output shaft 30. Therefore, only the differences between the first and second embodiments on the one hand and the fourth embodiment on the other will be described below.

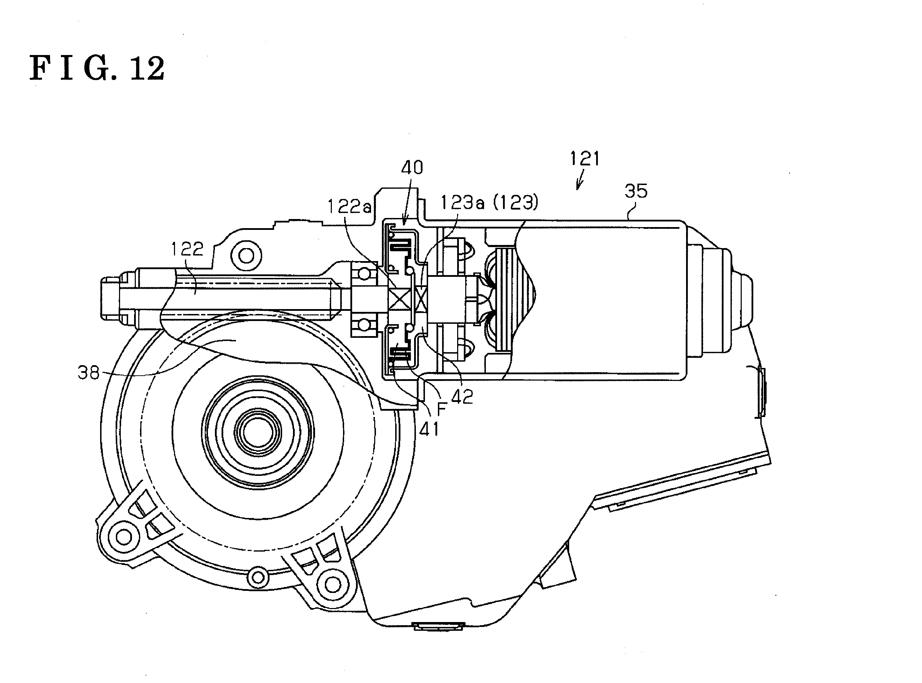

Illustrated in Fig. 12 is a cross sectional view of a driving unit 121 according to the fourth embodiment. As illustrated in Fig. 12, the driving unit 121 includes a worm 122 and a rotational shaft 123 (a motor shaft) of the electric motor 35 so as to be arranged separately from each other in an axial direction thereof. The worm 122 is engaged with the worm wheel 38. The worm 122 includes a fitting portion 122a, which is formed in a column shape whose cross-sectional shape is formed in a quadrangle, at an end portion of the worm 122 facing the rotating shaft 123. Furthermore, the rotating shaft 123 includes a fitting portion 123a, which is formed in a column shape whose cross-sectional shape is formed in a quadrangle, at an end portion of the rotating shaft 123 facing the worm 122.

The clutch mechanism 40 according to the fourth embodiment is provided between the worm 122 and the rotating shaft 123 in the axial direction. The rotor 41 of the clutch mechanism 40 is fitted to the fitting portion 122a of the worm 122. The housing 42 is fitted to the fitting portion 123a of the rotating shaft 123. Accordingly, when the electric motor 35 is rotatably driven, the housing 42 is rotated with the rotating shaft 123 as one unit. Then, the rotation of the housing 42 is transmitted to the rotor 41 via the viscous fluid F, thereby rotating the rotor 41. Accordingly, the worm 122 is rotated with the rotor 41 as one unit, and then, the rotation of the worm 122 is transmitted to the worm wheel 38. The worm wheel 38 according to the fourth embodiment is connected to the output shaft 30 so as to be rotated therewith as one unit. Then, the output shaft 30 rotates in response to the rotation of the worm wheel 38. The rotation of the output shaft 30 is transmitted to the luggage panel 11 via the first link 25 and the like, thereby opening and closing the luggage panel 11.

The clutch mechanism 40 according to the fourth embodiment has a function relating to the rotational transmission similar to the functions of the clutch mechanism 40 mentioned in the first and second embodiments. Additionally, a lead angle is set for the worm 122 in order to allow the worm 122 to be lightly rotated when a load (an inverse input) is applied (inputted) to the luggage panel 11.

According to the fourth embodiment, the following advantages and merits are achievable in addition to the advantages and merits similar to the first embodiment. According to the fourth embodiment, the clutch mechanism 40 is provided at a position closer to the rotating shaft 123 of the electric motor 35 relative to the worm 122. More specifically, the clutch mechanism 40 is provided at a former stage of the deceleration mechanism (122, 38). Accordingly, the torque, which is generated by the electric motor 35 and which is not yet increased by the speed reduction gear mechanism, is transmitted to the clutch mechanism 40. Therefore, a strength necessary for the clutch mechanism 40 (the rotor 41, the housing 42) may be reduced. As a result, each component may be reduced in size and thickness, which may further result in reducing the weight of the clutch mechanism 40 as a whole.

[Fifth embodiment]

A fifth embodiment of an opening-and-closing drive device, which is adapted as an opening-and-closing drive device for a slide door, will be described below with reference to the attached drawings. The opening-and-closing drive device according to the fifth embodiment differs from the opening-and-closing drive device according to the second embodiment in that the clutch mechanism 40 according to the fifth embodiment is modified so that a portion thereof overlaps with the output drum in the axial direction, so that the portion of the clutch mechanism 40 is accommodated within the output drum. Therefore, only the differences between the second embodiment and the fifth embodiment will be described below.

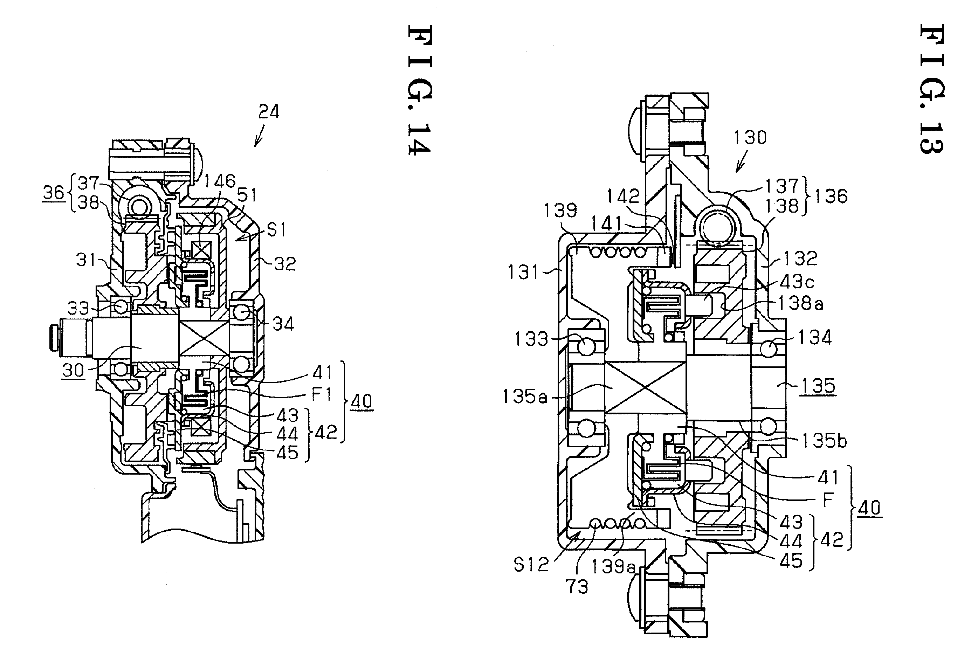

Illustrated in Fig. 13 is a cross-sectional view of a driving unit 130 according to the fifth embodiment. As illustrated in Fig, 13, the driving unit 130 includes a housing 131 and a cover 132, which define an outer shape of the driving unit 130 and each of which is made of resin. The housing 131 and the cover 132 support bearings 133 and 134, respectively, so that the bearings 133 and 134 are arranged in a concentric manner. The bearings 133 and 134 rotatably support both end portions of an output shaft 135, respectively, while allowing the output shaft 135 to be freely rotatable. The output shaft 135 is formed in a column shape having a stepped portion. More specifically, the output shaft 135 includes a fitting portion 135a between the bearings 133 and 134 so as to be positioned closer to the bearing 133 when comparing to the bearing 134. Furthermore, the output shaft 135 includes a shaft portion 135b, which is formed in a column shape, between the bearings 133 and 134 so as to be positioned closer to the bearing 134 relative to the bearing 133.

A speed reduction gear mechanism 136, an output drum 139, which serves as an output portion, and the clutch mechanism 40 are accommodated within an accommodating space S12 formed by the housing 131 and the cover 132. The deceleration mechanism 136 includes a worm 137 and a worm wheel 138 (a wheel gear). The worm 137 is fixed at the rotating shaft of the electric motor 35 (see Fig. 2). The worm wheel 138 is engaged with the worm 137 and is rotatably supported by the shaft portion 135b of the output shaft 135. When the power is supplied to the electric motor 35 in order to rotatably drive the electric motor 35, the worm wheel 138 rotates about the shaft portion 135b, as is explained in the first and second embodiments.

The worm wheel 138 includes plural recessed portions 138a at a surface of the worm wheel 138 facing the clutch mechanism 40 so as to be spaced away therefrom in an axial direction of the output shaft 135, while forming equal angles between the neighboring recessed portions 138a. The rotor 41 of the clutch mechanism 40 is fitted at the fitting portion 136a, which is positioned in the vicinity of the worm wheel 138. The housing 42, which is rotatably supported by the rotor 41 in a fluid-tight manner, does not include the protruding portion 45b at the base 45 unlike in the second embodiment, instead, the protruding portions 43c of the housing main body 43 penetrate the cover 44 (the fitting bores 44a) and are fitted into the respective recessed portions 138a. Accordingly, when the worm wheel 138 rotates about the shaft portion 135b (the output shaft 135), the housing main body 43 (the housing 42) is rotated with the worm wheel 138 as one unit. The rotation of the housing main body 43 is transmitted to the rotor 41 by the viscosity of the viscous fluid F, as is explained above.

The output drum 139 is fitted to the fitting portion 135a at a position between the bearing 133 and the rotor 41 in the axial direction. The cable 73 is wound around the output drum 139. The output drum 139 is made of, for example, resin and is formed in a cylinder shape having a bottom cover portion. Furthermore, the output drum 139 includes a circumferential wall 139a, which is formed in a cylinder shape, so as to protrude towards the worm wheel 138 in the axial direction. A portion of the clutch mechanism 40 is accommodated within the circumferential wall 139a. Accordingly, a thickness of the driving unit 130 in the axial direction is reduced.

The rotations of the output shaft 135 and the output drum 139 are transmitted to the slide door 70 via the cable 73 and the like, thereby opening and closing the slide door 70. A ring magnet 141 is fixed at an opening end surface of the circumferential wall 139a in the axial direction. The ring magnet 141 includes plural N-poles and S-poles in a circumferential direction so as to be arranged in an alternating manner, Furthermore, hall sensors 142, which are supported by the cover 132, are arranged at an outer position relative to the ring magnet 141 so as to be spaced away from each other in the axial direction while ensuring regular distances between the neighboring hall sensors 142. The hall sensors 142 detect a rotational position and a rotational speed of the output shaft 135, which is rotated with the ring magnet 141 as one unit, so that the detection results of the hall sensors 142 are used for detecting the opening and closing position and the opening and closing speed of the slide door 70.

According to the fifth embodiment, the following advantages and merits are achievable in addition to advantages and merits similar to the first embodiments. According to the fifth embodiment, because a portion of the clutch mechanism 40 is accommodated within the output drum 139, the thickness of the driving unit 130 in the axial direction is reduced.

According to the fifth embodiment, the ring magnet 141 is fixed at the output drum 139 so that the output drum 139 and the ring magnet 141 serve as the sensor rotor (51). As a result, a number of components used for the opening-and-closing drive device are reduced.

[Sixth embodiment]

A sixth embodiment of an opening-and-closing drive device, which is adapted as an opening-and-closing drive device for a luggage panel, will be described below with reference to the attached drawings. The opening-and-closing drive device according to the sixth embodiment differs from the opening-and-closing drive device according to the first embodiment in that the clutch mechanism 40 is filled with a magnetic viscous fluid as the viscous fluid relating to the rotational transmission. Therefore, only the differences between the first embodiment and the sixth embodiment will be described below.

Illustrated in Fig. 14 is a cross-sectional view of the driving unit 24 according to the sixth embodiment. As illustrated in Fig. 14, a clearance of the clutch mechanism 40 of the driving unit 24, into which the rotor 41 and the housing main body 43 are fitted, is filled with a magnetic viscous fluid F1 instead of the viscous fluid F. An electromagnet 146, which is formed in a cylinder shape, is provided at an outer circumferential surface of the cover 44 in a state where the electromagnet 146 is surrounded (covered) by the sensor rotor 51.

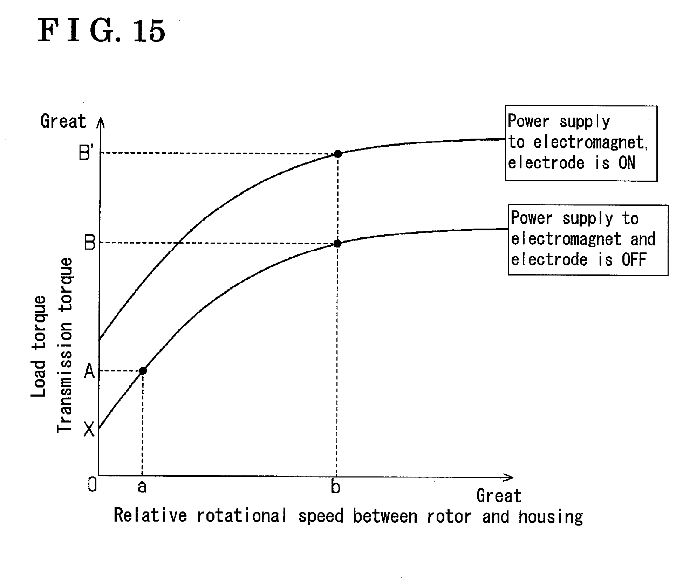

The clutch mechanism 40, which is filled with the magnetic viscous fluid F1, has the characteristic of increasing and decreasing the transmission torque (the load torque) in response to the increase and decrease of the relative speed (the relative rotational speed) between the rotor 41 and the housing 42. However, as illustrated in Fig. 15, the characteristic of the transmission torque (the load torque) is changed in response to a power supply state of the electromagnet 146. More specifically, the characteristic of the transmission torque (the load torque) to be obtained when the electromagnet 146 is electrified is enhanced when comparing to the characteristic of the transmission torque (the load torque) to be obtained when the electromagnet 146 is not electrified, because when the electromagnet 146 is electrified, a magnetic field is generated and is applied to the magnetic viscous fluid F1, which results in changing the viscosity of the magnetic viscous fluid F1. The characteristic of the transmission torque (the load torque) may be continuously enhanced or reduced by controlling a power supply to the electromagnet 146. Accordingly, the characteristic of the clutch mechanism 40 relating to the transmission torque (the load torque) may be widened when comparing to the case where the clutch mechanism 40 is filled with the viscous fluid F having a constant viscosity.

For example, in the case where the luggage panel 11 is opened and closed by using the driving force generated by the electric motor 35, the transmission torque B may be increased when increasing the relative speed b (i.e. the opening and closing speed). Accordingly, the torque necessary for driving the luggage panel 11 to be opened and closed may be obtained.

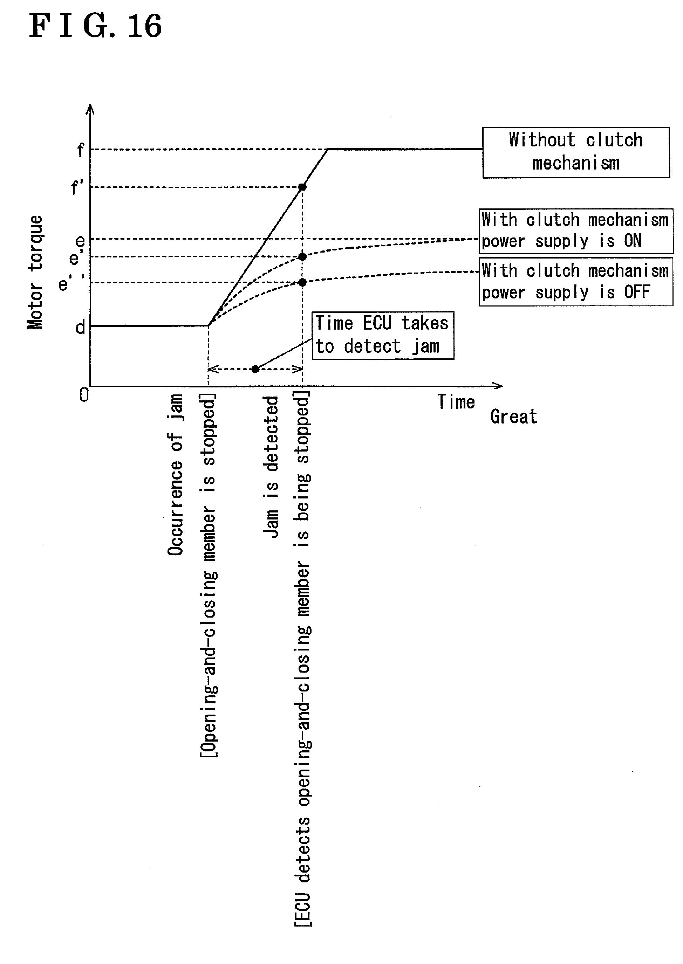

Furthermore, as illustrated in Fig. 16, in the case where the object is caught at the luggage panel 11 while being operated and in a case where a known pinch detecting function is provided at the luggage panel 11, the viscosity of the magnetic viscous fluid F1 may be decreased when the power supply to the electromagnet 146 is turned off at the same time when the known pinch detecting function detects the pinch. Accordingly, an increasing speed of the transmission torque may be restricted, which may further result in reducing the motor torque generated after the pinch is detected (i.e. the anti-pinch force).

Accordingly to the sixth embodiment, the following advantages and merits are achievable in addition to advantages and merits similar to the first embodiment. According to the sixth embodiment, the viscosity of the magnetic viscous fluid F1 is changed when the magnetic field is applied to the magnetic viscous fluid F1 by the electromagnet 146. Accordingly, the characteristic relating to the transmission torque (the load torque) of the clutch mechanism 40 may be widened.

[Seventh embodiment]

A seventh embodiment of an opening-and-closing drive device, which is adapted as an opening-and-closing drive device for a luggage panel, will be described below with reference to the attached drawing. The opening-and-closing drive device according to the seventh embodiment differs from the opening-and-closing drive device according to the sixth embodiment in that the clutch mechanism 40 according to the seventh embodiment is filled with an electroviscous fluid F2 as the viscous fluid relating to the rotational transmission. Therefore, only the differences between the sixth embodiment and the seventh embodiment will be described below,

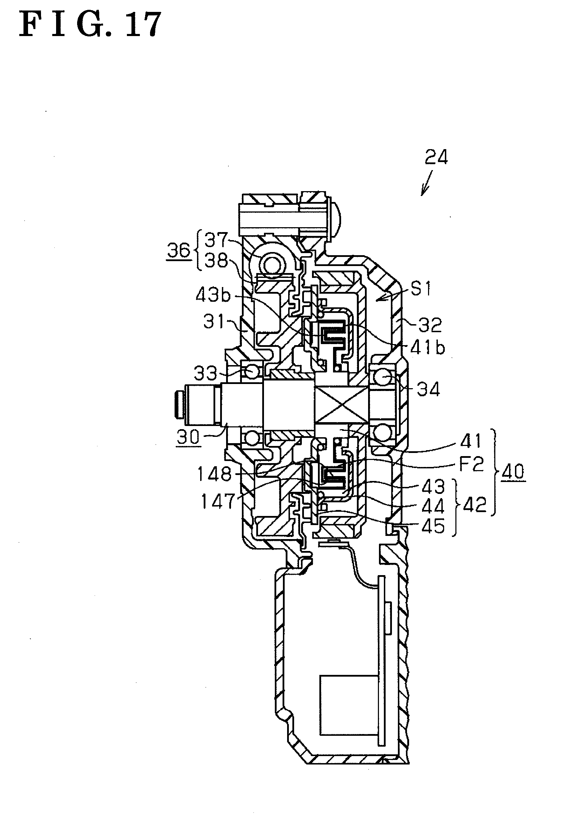

Illustrated in Fig. 17 is a cross-sectional view of the driving unit 24 according to the seventh embodiment. As illustrated in Fig. 17, the clearance of the clutch mechanism 40 of the driving unit 24, into which the rotor 41 and the housing main body 43 is fitted, is filled with an electroviscous fluid F2 instead of the viscous fluid F. Electrodes 147 and 148 are connected to the flange portion 41b of the rotor 41 and the flange portion 43b of the housing main body 43, respectively, so as to face each other and so as to be against a flow of the electroviscous fluid F2.

The clutch mechanism 40, which is filled with the electroviscous fluid F2, has the characteristic of increasing and decreasing the transmission torque (the load torque) in response to the increase and decrease of the relative speed (the relative rotational speed) between the rotor 41 and the housing 42. Furthermore, the characteristic of the transmission torque (the load torque) is enhanced because a voltage, which is generated when the electrodes 147 and 148 are electrified, is added to the electroviscous fluid F2 and the viscosity of the electroviscous fluid F2 is changed (see Fig. 15) in response to the power supply state of the electrodes 147 and 148. Accordingly, the range of the characteristic of the transmission torque (the load torque) to be generated at the clutch mechanism 40 may be extended when comparing to the viscous fluid F having the constant viscosity.

According to the seventh embodiment, advantages and merits similar to the sixth embodiment may be achieved. Additionally, the opening-and-closing drive device according to the above-described embodiments may be modified as follows.

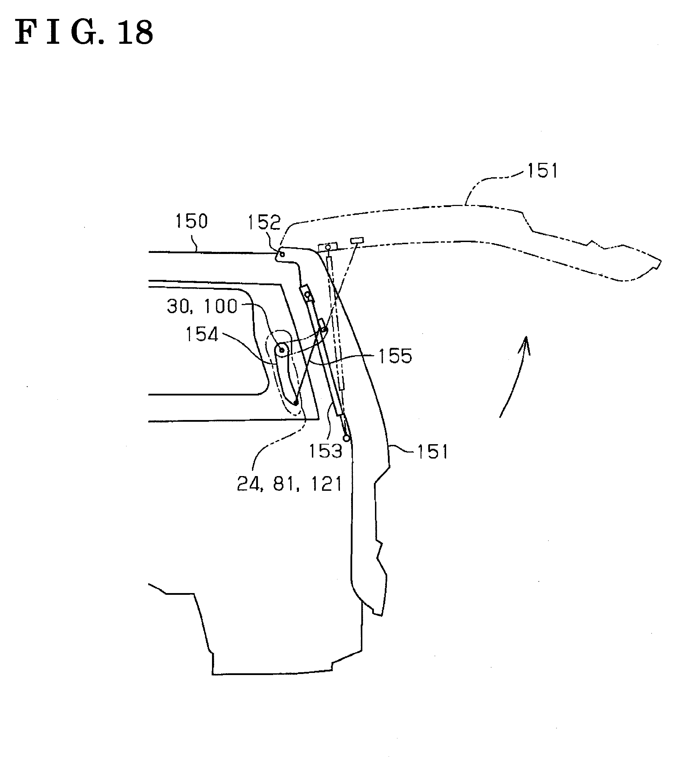

As illustrated in Fig. 18, each of the driving units 24, 81 and 121 may be adapted to an opening-and-closing drive device for a back door. A back door 151, which serves as an opening-and-closing member, is attached to a rear portion of a vehicle body 150 via a door hinge 152 so as to be opened and closed. The back door 151 is supported by means of a gas damper 153. Additionally, the back door 151 is opened in a manner where the back door 151 is upwardly pushed so as to be rotated about the door hinge 152, which is provided at an upper edge portion of the vehicle body 150, and the gas damper 153 supports the upward pushing of the back door 151 by a gas reaction force generated by the gas damper 153.

Either one of the driving units 24, 81 and 121 is provided at the rear portion of the vehicle body 150. An elongated arm 154, which serves as a connecting member, is rotatably connected to the output shaft 30 or the output shaft 100 of either one of the driving units 24, 81 and 121. The arm 154 is rotatably connected to an end portion of a rod 155, which is formed in a bar shape, at an end portion of the arm 154. The other end portion of the arm 154 is rotatably connected to the back door 151. Accordingly, when the electric motor 35 (see Fig. 2) is rotatably driven, the output shaft 30 (100) is rotated as explained above. Then, the rod 155 is upwardly pushed in response to a rotation of the arm 154 with the output shaft 30 (100) as one unit, thereby opening and closing the back door 151, which is supported by the vehicle body 150. Accordingly, each of the driving units 24, 81 and 121 is used as the opening-and-closing drive device for the back door.

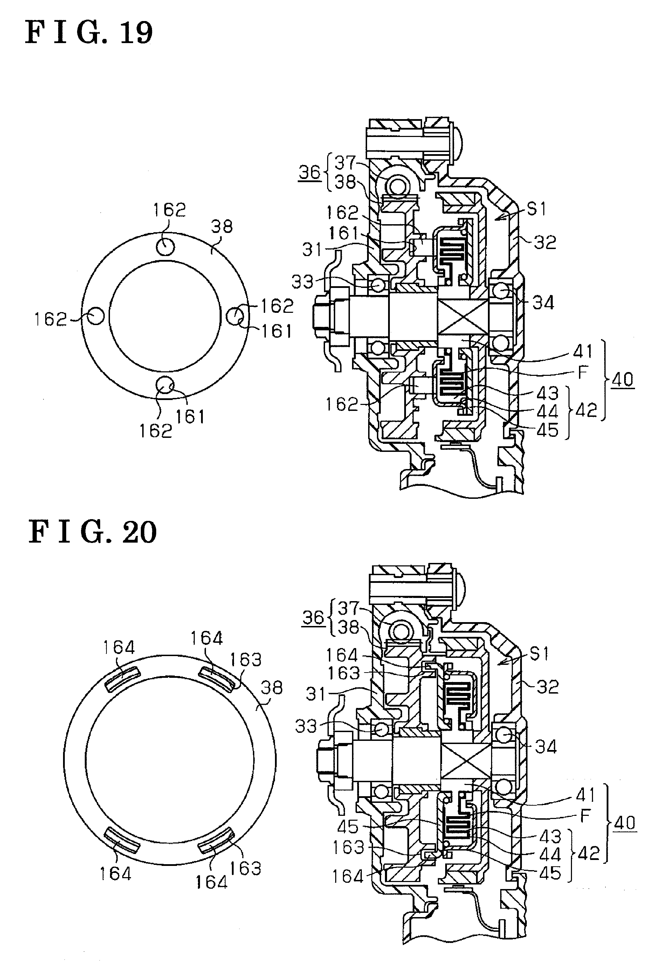

As illustrated in Fig. 19, the worm wheel 38 of the first embodiment may be modified so as not to include the recessed portions 38b. Furthermore, the base 45 of the first embodiment may be modified so as not to include the protruding portion 45b. Alternatively, the worm wheel 38 may be modified so as to include plural recessed portions 161, each of which is formed in a round shape, so as to extend in the axial direction at a surface of the worm wheel 38 facing the clutch mechanism 40 so as to be spaced away therefrom and so as to form equal angles between the neighboring recessed portions 161. Furthermore, the clutch mechanism 40 may be modified so that the housing main body 43 includes plural protruding portions 162, each of which is formed in a pin-shape and each of which is inserted into each of the recessed portions 161 so as to penetrate through the cover 44, so that the worm wheel 38 and the housing main body 43 (the housing 42) are connected to be rotated with each other as one unit.

As illustrated in Fig. 20, the worm wheel 38 may be modified so as to include plural protruding portions 163, each of which is formed in an arc shape and extends in the axial direction, at an outer circumferential portion of the worm wheel 38, more specifically on a surface thereof facing the clutch mechanism 40 so as to be spaced away therefrom. Furthermore, the clutch mechanism 40 may be modified so that the base 45 includes plural protruding portions 164, each of which is formed by bending a portion of the base 45 so as to extend in the axial direction to form a nail shape. The worm wheel 38 and the base 45 (the housing 42) may be connected so as to rotate with each other as one unit.

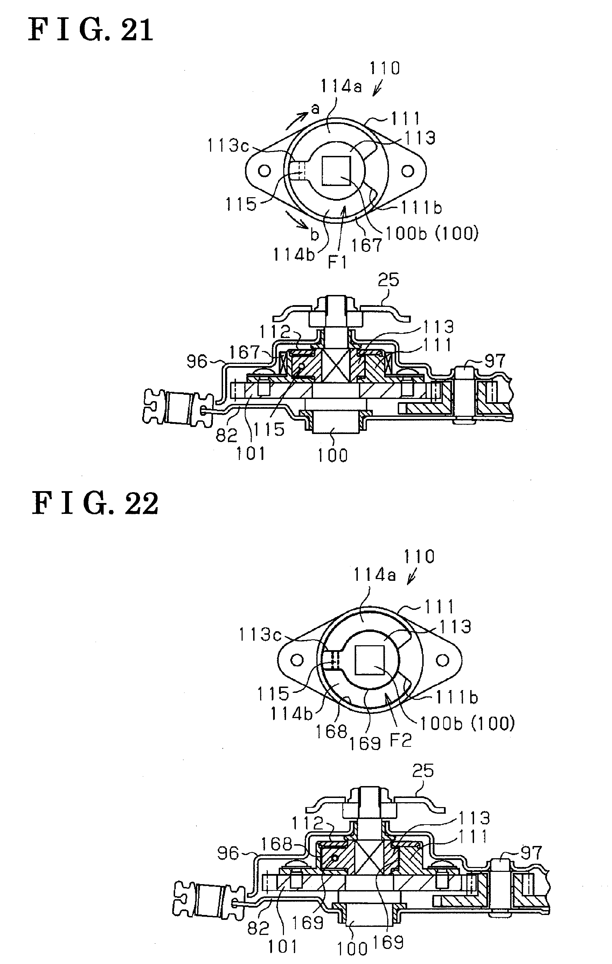

The magnetic viscous fluid F1 or the electroviscous fluid F2 may be used for the clutch mechanism 40 of the second embodiment, as is the case with the sixth and seventh embodiments. Furthermore, as illustrated in Fig. 21, the clutch mechanism 110 of the third embodiment may be filled with the magnetic viscous fluid F1 as the viscous fluid relating to the rotational transmission. In this case, an electromagnet 167, which is formed in an arc shape, is provided at an outer circumferential surface of the housing 111. According to the above-described modification, the characteristic of the transmission torque (the load torque) and the like of the clutch mechanism 110 may be used in a wider range when comparing to the case where the viscous fluid F having a constant viscosity is used, in addition to advantages and merits similar to the third embodiment.

As illustrated in Fig. 22, the clutch mechanism 110 of the third embodiment may be modified so as to be filled with the electroviscous fluid F2 as the viscous fluid relating to the rotational transmission. In this case, an electrode 168 is provided at an inner circumferential surface of the housing 111. Furthermore, an electrode 169 is provided at an inner circumferential surface of each of an outer wall of the rotor 113 and the orifice 115. According to the above-described modification, the characteristic of the transmission torque (the load torque) of the clutch mechanism 110 may be used in a wider range when comparing to the case where the viscous fluid F having the constant viscosity is used, in addition to advantages and merits similar to the third embodiment.

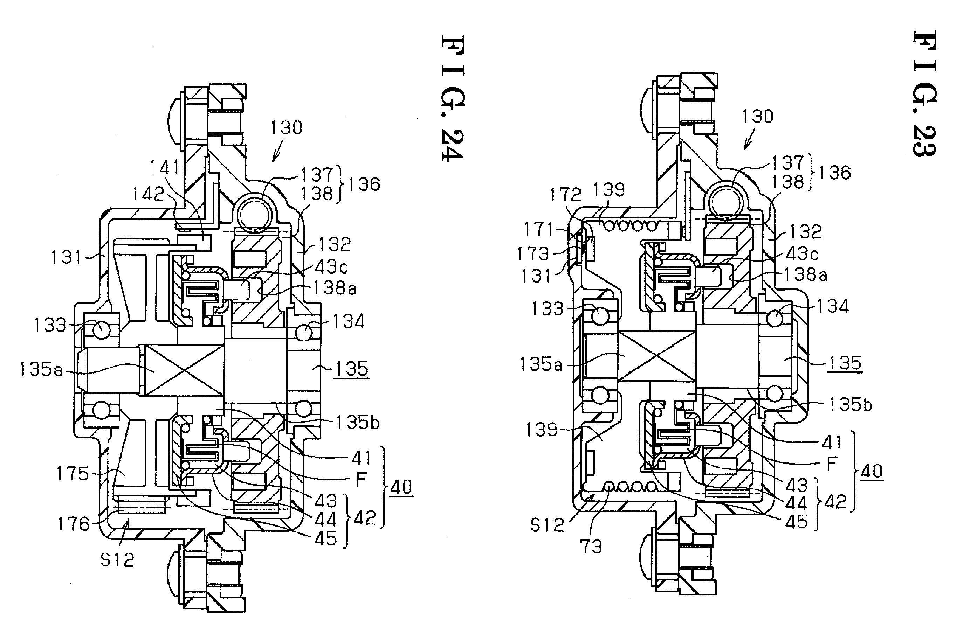

As illustrated in Fig. 23, the output drum 139 may be modified so as to include a groove portion 171, which is formed in a circular shape, at an end surface of the output drum 139 facing the housing 131. Furthermore, a ring magnet 172 may be embedded and fixed within the groove portion 171. In this case, plural hall sensors 173 are supported by the housing 131 so as to correspond to the ring magnet 172 at an outer position relative to the ring magnet 172 and so as to be spaced away from the ring magnet 172 in the axial direction while maintaining regular intervals between the neighboring hall sensors 173. According to the above-described modification, advantages and merits similar to the fifth embodiment may be achievable.

As illustrated in Fig. 24, the driving unit 130 of the fifth embodiment may be modified so as to include a pulley 175, which serves as an output portion, and a belt 176, which serves as a connecting member engaged with the pulley 175, instead of the output drum 139 and the cable 73, which relate to an opening and closing drive of the slide door 70.

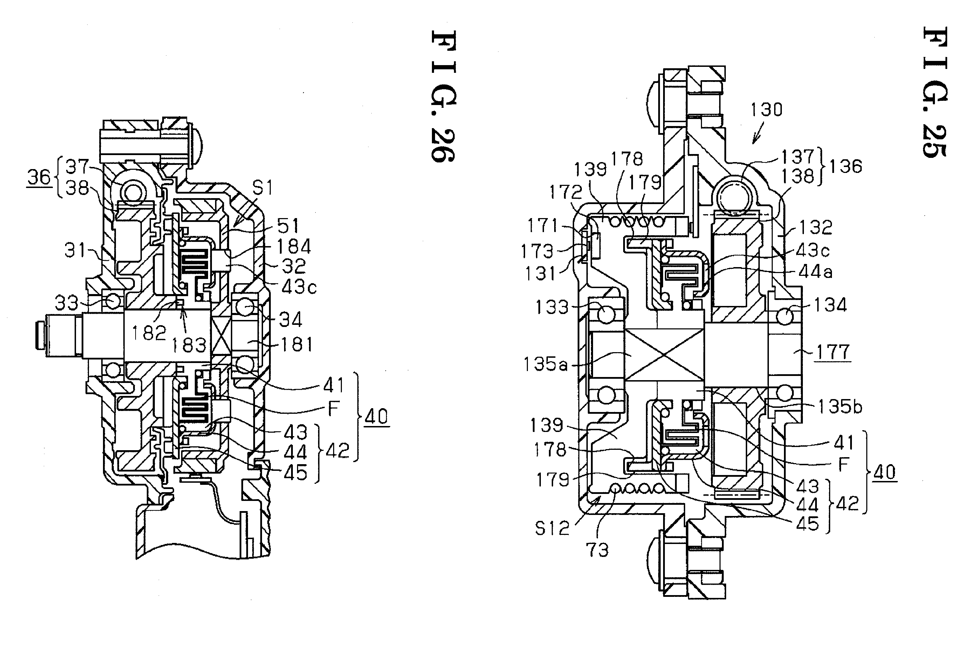

As illustrated in Fig. 25, the driving unit 130 of the fifth embodiment may be modified so that the worm wheel 138 is connected to the clutch mechanism 40 so as to be rotated with the rotor 41 of the clutch mechanism 40 as one unit, and further, so as to include an output shaft 177 for rotatably supporting the output drum 139. In this case, the recessed portions 138a and the protruding portions 43c, which relate to the rotational transmission between the worm wheel 138 and the housing 42, are not provided at the worm wheel 138 and the housing 42, respectively. The housing 42 is supported by the rotor 41 so as to be rotatable relative to the worm wheel 138. Furthermore, the output drum 139 may be modified so as to include plural recessed portions 178, each of which is formed in a circular shape, at a surface of the worm wheel 138 facing the clutch mechanism 40 so as to be spaced away therefrom while forming equal angles between the neighboring recessed portions 178. The clutch mechanism 40 may be modified so that the base 45 includes plural protruding portion 179, which are formed by bending a portion of the base 45 so as to extend in the axial direction to form a nail shape. Then, the output drum 139 and the base 45 (the housing 42) may be connected so as to rotate with each other as one unit.

As illustrated in Fig. 26, the driving unit 24 of the first embodiment may be modified so as to include an output shaft 181 for rotatably supporting the rotor 41 of the clutch mechanism 40. In this case, plural protruding portions 182, each of which is formed in a pin shape, are provided at an intermediate portion of the worm wheel 38, more specifically on the surface thereof facing the clutch mechanism 40 so as to extend in the axial direction while maintaining equal angles between the neighboring protruding portions 182. Furthermore, plural recessed portions 183, each of which is formed in a circular shape and into which the respective protruding portions 182 are inserted, are formed on the rotor 41. Accordingly, the worm wheel 38 and the rotor 41 are connected so as to be rotated with each other as one unit. Furthermore, plural fitting bores 184, into which the respective protruding portions 43c fitted so as to penetrate the cover 44 (the fitting bores 44a) of the housing main body 43, are formed at the sensor rotor 51. Accordingly, the sensor rotor 51 (the output shaft 181) and the housing main body 43 are connected so as to rotate with each other as one unit. According to the above-described modification, the rotation of the worm wheel 38 may be transmitted to the output shaft 181 via the clutch mechanism 40.

An output gear (a member having toothed portion) may be adapted as an output member, which is provided at the output shaft, in each of the above-described embodiments. In other words, the connection between the output shaft and the opening-and-closing member may be achieved by means of a gear connection.

An opening-and-closing drive device for an opening-and-closing member for a vehicle includes an electric driving source (35) serving as a power source for opening and closing the opening-and-closing member (11, 70), which is supported by a vehicle body (10, 60, 150) so as to be opened and closed, an output portion (30, 72, 139, 175) connected to the electric driving source (35) and transmitting a driving force generated by the electric driving source (35) to the opening-and-closing member (11, 70) in order to open and close the opening-and-closing member (11, 70) via a connecting member (25, 26, 73, 154), and a clutch mechanism (40, 110) provided on a power transmission path between the electric driving source (35) and the output portion (30, 72, 139, 175) and including a viscous fluid (F, F1, F2) for transmitting a power between the electric driving source (35) and the output portion (30, 72, 139, 175) by viscosity.

## Claims

1. An opening-and-closing drive device for an opening-and-closing member for a vehicle comprising:
an electric driving source (35) serving as a power source for opening and closing the opening-and-closing member (11, 70), which is supported by a vehicle body (10, 60, 150) so as to be opened and closed;
an output portion (30, 72, 139, 175) connected to the electric driving source (35) and transmitting a driving force generated by the electric driving source (35) to the opening-and-closing member (11, 70) in order to open and close the opening-and-closing member (11, 70) via a connecting member (28, 26, 73, 154); and
a clutch mechanism (40, 110) provided on a power transmission path between the electric driving source (35) and the output portion (30, 72, 139, 175) and including a viscous fluid (F, F1, F2) for transmitting a power between the electric driving source (35) and the output portion (30, 72, 139, 175) by viscosity.

2. The opening-and-closing drive device for the opening-and-closing member for the vehicle according to Claim 1 further comprising a speed reduction gear mechanism (36, 91, 136) connected to the electric driving source (35) and an output shaft (30, 77, 100) for supporting the output portion (72, 139, 175), wherein the clutch mechanism (40, 110) includes an input-side member (42, 111: housing) connected to the deceleration mechanism (36, 91, 136) and an output-side member (41, 113: rotor) connected to the output shaft (30, 77, 100) and being connectable to the input-side member (42, 111) via the viscous fluid (F, F1, F2).

3. The opening-and-closing drive device for the opening-and-closing member for the vehicle according to Claim 2, wherein the speed reduction gear mechanism (91) includes a first deceleration gear train (G1), which is connected to the electric driving source (35) and is rotatably supported by an intermediate shaft (97: supporting shaft 97), and a second deceleration gear train (G2), which is connected to the first deceleration gear train (G1) and is rotatably supported by the output shaft (100), and wherein the input-side member (111: housing) is connected to the second deceleration gear train (G2).

4. The opening-and-closing drive device for the opening-and-closing member for the vehicle according to Claim 2 or Claim 3, wherein the speed reduction gear mechanism (36, 91, 136) includes a wheel gear (38, 93, 138) supported by the output shaft (30, 77, 100) so as to be rotatable relative to the output shaft (30, 77, 100), the input-side member includes a housing (42, 111), which is fixed at the wheel gear (38, 93, 138) so as to be rotated therewith as one unit, and the output-side member includes a rotor (41, 113), which is accommodated within the housing (42, 111) together with the viscous fluid (F, F1, F2) and is connected to the output shaft (30, 77, 100) so as to be rotated therewith as one unit.

5. The opening-and-closing drive device for the opening-and-closing member for the vehicle according to Claim 1 further comprising a speed reduction gear mechanism (36) connected to the electric driving source (35) and a rotating shaft (123) supporting the output portion (30) so as to be rotatable, wherein the clutch mechanism (40) includes an input-side member (42) connected to the speed reduction gear mechanism (36) via the rotating shaft (123) and an output-side member (41), which is connected to the output portion (30) and which is connectable to the input-side member (42) via the viscous fluid (F).

6. The opening-and-closing drive device for the opening-and-closing member for the vehicle according to Claim 2 or Claim 4, wherein the clutch mechanism (40, 110) is arranged on the output shaft (30, 77, 100) between the speed reduction gear mechanism (36, 91, 136) and the output portion (30, 72, 139, 175) and is accommodated at the output portion (30, 72, 139, 175).

7. The opening-and-closing drive device for the opening-and-closing member for the vehicle according to Claim 1, wherein the connecting member includes a string member (73) connected to the opening-and-closing member (11, 70) and the output portion includes an output drum (72, 139) on which the string member (73) is wound.

8. The opening-and-closing drive device for the opening-and-closing member for the vehicle according to Claim 1, wherein the connecting member includes a toothed portion connected to the opening-and-closing member (11, 70) and the output portion includes an output gear engaged with the toothed portion.

9. The opening-and-closing drive device for the opening-and-closing member for the vehicle according to Claim 1, wherein the connecting member includes an arm (25, 26, 154) connected to the opening-and-closing member (11, 70) and the output portion includes an output shaft (30), which is rotated with the arm (25, 26, 154) as one unit.

10. The opening-and-closing drive device for the opening-and-closing member for the vehicle according to Claim 1 further comprising an output shaft (30, 77, 100) connected to the output portion (30, 72, 139, 175) so as to be rotated therewith as one unit and a speed reduction gear mechanism (36, 91, 136) connected to the electric driving source (35) via the clutch mechanism (40, 110), wherein the speed reduction gear mechanism (40, 110) includes a wheel gear (38, 93, 138), which is connected to the output shaft (30, 77, 100) so as to be rotated therewith as one unit, and a worm (37, 92, 122, 133), which engages with the wheel gear (38, 93, 138), and wherein the clutch mechanism (40, 110) includes a housing (42, 111), into which a rotating shaft of the electric driving source (35) is fitted so as to rotate the housing (42, 111) with the rotating shaft of the electric driving source (35) as one unit, and a rotor (41, 113), which is accommodated within the housing (42, 111) together with the viscous fluid (F, F1, F2) and into which the worm (37, 92, 122, 137) is fitted so as to rotate the rotor (41, 113) with the worm (37, 92, 122, 137) as one unit.

11. The opening-and-closing drive device for the opening-and-closing member for the vehicle according to Claim 1, wherein the viscous fluid includes a magnetic viscous fluid (F1) whose viscosity is changeable, and the clutch mechanism (40, 110) includes an electromagnet (146, 167) for applying a magnetic field to the magnetic viscous fluid (F1).

12. The opening-and-closing drive device for the opening-and-closing member for the vehicle according to Claim 1, wherein the viscous fluid (F) includes an electroviscous fluid (F2) and the clutch mechanism (40, 100) includes an electrode (147, 148, 168, 169) for applying a voltage to the electroviscous fluid (F2).
